(19) Europäisches Patentamt / European Patent Office / Office européen des brevets

(11) **EP 3 902 251 A1**

(12) **EUROPEAN PATENT APPLICATION**
published in accordance with Art. 153(4) EPC

(43) Date of publication:
**27.10.2021 Bulletin 2021/43**

(21) Application number: **19901241.0**

(22) Date of filing: **23.12.2019**

(51) Int Cl.:
*H04N 19/11* (2014.01)    *H04N 19/593* (2014.01)
*H04N 19/105* (2014.01)    *H04N 19/186* (2014.01)
*H04N 19/132* (2014.01)

(86) International application number:
**PCT/KR2019/018295**

(87) International publication number:
**WO 2020/130745 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2018 US 201862783501 P**

(71) Applicant: **Samsung Electronics Co., Ltd.**
**Suwon-si, Gyeonggi-do 16677 (KR)**

(72) Inventors:
• **TAMSE, Anish**
  **Suwon-Si, Gyeonggi-do 16677 (KR)**
• **PARK, Minwoo**
  **Suwon-Si, Gyeonggi-do 16677 (KR)**

(74) Representative: **Appleyard Lees IP LLP**
**15 Clare Road**
**Halifax HX1 2HY (GB)**

(54) **ENCODING METHOD AND DEVICE THEREOF, AND DECODING METHOD AND DEVICE THEREOF**

(57)    Provided is a video decoding method including: determining an intra prediction mode of a current chroma block, from chroma intra prediction information obtained from a bitstream; when the intra prediction mode of the current chroma block according to the chroma intra prediction information is a cross component linear model (CCLM) mode, obtaining reference chroma samples adjacent to the current chroma block, and reference luma samples corresponding to the reference chroma samples; and predicting the current chroma block, based on a correlation between the reference chroma samples and the reference luma samples and a reference luma block corresponding to the current chroma block, and wherein the number of predetermined CCLM mode reference locations from which the reference chroma samples can be obtained is constant, regardless of a size of the current chroma block.

FIG. 16

**Description**

TECHNICAL FIELD

The disclosure relates to video encoding and decoding methods, and more particularly, to video encoding and decoding methods of providing a cross component linear model (CCLM) mode with improved coding efficiency.

BACKGROUND ART

A high quality video requires a large amount of data for encoding. However, there is a limit in a bandwidth available to transmit video data, and thus, a data rate to be applied to transmission of the video data may be limited. Accordingly, in order to efficiently transmit the video data, there is a demand for video data encoding and decoding methods with minimal degradation of image quality and increased compression rates.

Video data may be compressed by removing spatial redundancy and temporal redundancy between pixels. Pixels adjacent to each other generally have common characteristics, and thus, in order to remove redundancy between the adjacent pixels, encoding information is transmitted in a data unit consisting of pixels.

Pixel values of the pixels included in the data unit are not directly transmitted, and a method required for obtaining the pixel values is transmitted. A prediction method of predicting a pixel value similar to an original value is determined for each data unit, and encoding information about the prediction method is transmitted from an encoder to a decoder. Also, because a prediction value is not entirely equal to the original value, residual data of a difference between the original value and the prediction value is transmitted from the encoder to the decoder.

As the accuracy of prediction increases, encoding information required to specify a prediction method increases but a size of residual data decreases. Thus, the prediction method is determined based on the encoding information and the size of the residual data. In particular, data units split from a picture have various sizes, and as a size of a data unit increases, the likelihood of the accuracy of prediction decreasing increases whereas encoding information decreases. Thus, a size of a block is determined in accordance with characteristics of the picture.

Also, prediction methods include into intra prediction and inter prediction. The intra prediction refers to a method of predicting pixels of a block from adjacent pixels of the block. The inter prediction refers to a method of predicting pixels by referring to pixels of another picture, which are referred to by a picture including a block. Thus, spatial redundancy is removed according to the intra prediction, and temporal redundancy is removed according to the inter prediction.

As the number of prediction methods is increased, a size of encoding information for indicating the prediction methods is increased. Thus, the size of the encoding information to be applied to the block may be decreased by predicting the encoding information from another block.

A loss of video data is allowed to the extent that human eyes cannot recognize the loss, and thus, the amount of residual data may be decreased by performing lossy compression on the residual data in transformation and quantization processes.

DESCRIPTION OF EMBODIMENTS

TECHNICAL PROBLEM

Provided is a video encoding method using a cross component linear model (CCLM) mode that is an encoding tool for predicting a chroma block according to a correlation between adjacent luma pixels and chroma pixels and a luma block corresponding to the chroma block. Also, provided is a video decoding method including splitting a current block, determining an encoding order of split lower blocks, and determining an encoding method according to whether adjacent blocks of the current block have been encoded. Also provided is a computer-readable recording medium having recorded thereon a program for executing a video encoding method and a video decoding method, according to an embodiment of the disclosure, on a computer.

SOLUTION TO PROBLEM

The disclosure provides a video decoding method including: determining an intra prediction mode of a current chroma block, from chroma intra prediction information obtained from a bitstream; when the intra prediction mode of the current chroma block according to the chroma intra prediction information is a cross component linear model (CCLM) mode, obtaining reference chroma samples adjacent to the current chroma block, and reference luma samples corresponding to the reference chroma samples; and predicting the current chroma block, based on a correlation between the reference chroma samples and the reference luma samples and a reference luma block corresponding to the current chroma block, wherein the number of predetermined CCLM mode reference locations from which the reference chroma samples can be obtained is constant, regardless of a size of the current chroma block.

The disclosure provides a video decoding apparatus including: a memory storing one or more instructions for implementing the video decoding method; and a processor configured to execute the one or more instructions. Also, provided is a computer-readable recording medium having recorded thereon a program including one or more instructions for implementing the video decoding method.

The disclosure provides a video encoding method including: obtaining reference chroma samples adjacent to a current chroma block, and reference luma samples corresponding to the reference chroma samples, and predicting the current chroma block, based on a correlation between the reference chroma samples and the reference luma samples, and a reference luma block corresponding to the current chroma block; according to a result of the predicting of the current chroma block, determining whether a cross component linear model (CCLM) mode is to be applied to the current chroma block; and generating a bitstream including chroma intra prediction information indicating whether the CCLM mode is to be applied to the current chroma block, wherein the number of predetermined CCLM mode reference locations from which the reference chroma samples can be obtained is constant, regardless of a size of the current chroma block.

The disclosure provides a video encoding apparatus including: a memory storing one or more instructions for implementing the video encoding method; and a processor configured to execute the one or more instructions. Also, provided is a computer-readable recording medium having recorded thereon a program including one or more instructions for implementing the video encoding method.

The technical problems of the present embodiment are not limited to the aforementioned technical problems, and other unstated technical problems may be inferred from embodiments below.

ADVANTAGEOUS EFFECTS OF DISCLOSURE

According to various embodiments of a cross component linear model (CCLM) mode described in the disclosure, prediction precision with respect to a chroma block is improved. Due to improvement in prediction of the chroma block, video encoding efficiency may be improved.

BRIEF DESCRIPTION OF DRAWINGS

FIG. 1A is a block diagram of an image encoding apparatus based on coding units having a tree structure according to an embodiment of the disclosure.
FIG. 1B is a block diagram of a video decoding apparatus based on coding units having a tree structure according to an embodiment.
FIG. 2 illustrates a process of determining at least one coding unit by splitting a current coding unit according to an embodiment.
FIG. 3 illustrates a process of determining at least one coding unit by splitting a non-square coding unit according to an embodiment.
FIG. 4 illustrates a process of splitting a coding unit based on at least one of block shape information and split shape information according to an embodiment.

FIG. 5 illustrates a method of determining a predetermined coding unit from among an odd number of coding units according to an embodiment.
FIG. 6 illustrates an order of processing a plurality of coding units when the plurality of coding units are determined by splitting a current coding unit according to an embodiment.
FIG. 7 illustrates a process of determining that a current coding unit is to be split into an odd number of coding units when the coding units are not processable in a predetermined order according to an embodiment.
FIG. 8 illustrates a process of determining at least one coding unit by splitting a first coding unit according to an embodiment.
FIG. 9 illustrates that a shape into which a second coding unit is splittable is restricted when a non-square second coding unit determined by splitting a first coding unit satisfies a predetermined condition according to an embodiment.
FIG. 10 illustrates a process of splitting a square coding unit when split shape information cannot indicate that the square coding unit is to be split into four square coding units according to an embodiment.
FIG. 11 illustrates that a processing order between a plurality of coding units may be changed depending on a process of splitting a coding unit according to an embodiment.
FIG. 12 illustrates a process of determining a depth of a coding unit as a shape and a size of the coding unit change, when the coding unit is recursively split such that a plurality of coding units are determined according to an embodiment.
FIG. 13 illustrates depths that are determinable based on shapes and sizes of coding units, and part indexes (PIDs) that are for identifying the coding units according to an embodiment.
FIG. 14 illustrates that a plurality of coding units are determined based on a plurality of predetermined data units included in a picture according to an embodiment.
FIG. 15 illustrates a processing block serving as a unit for determining a determination order of reference coding units included in a picture according to an embodiment.
FIG. 16 provides a video decoding apparatus using chroma block prediction according to a cross component linear model (CCLM) mode.
FIG. 17 provides a video encoding apparatus using chroma block prediction according to a CCLM mode.
FIG. 18 illustrates a prediction method according to a CCLM mode, according to an embodiment.
FIG. 19 illustrates CCLM mode reference locations referred to by a chroma block of a 4x4 size.
FIG. 20 illustrates CCLM mode reference locations referred to by a chroma block of an 8x8 size.
FIG. 21 illustrates CCLM mode reference locations referred to by a chroma block of a 4x8 size.

FIG. 22 illustrates CCLM mode reference locations referred to by a chroma block of an 8x4 size.

FIG. 23 illustrates an embodiment of CCLM mode reference locations referred to by a chroma block of an MxN size, in an upper-left CCLM mode.

FIG. 24 illustrates an embodiment of CCLM mode reference locations referred to by a chroma block of an MxN size, in an upper-left CCLM mode.

FIG. 25 illustrates an embodiment of CCLM mode reference locations referred to by a chroma block of an MxN size, in an upper-left CCLM mode.

FIG. 26 illustrates an embodiment of CCLM mode reference locations referred to by a chroma block of an MxN size, in an upper CCLM mode.

FIG. 27 illustrates an embodiment of CCLM mode reference locations referred to by a chroma block of an MxN size, in an upper CCLM mode.

FIG. 28 illustrates an embodiment of CCLM mode reference locations referred to by a chroma block of an MxN size, in a left CCLM mode.

FIG. 29 illustrates an embodiment of CCLM mode reference locations referred to by a chroma block of an MxN size, in a left CCLM mode.

FIG. 30 describes embodiments of determining a reference luma sample corresponding to a reference chroma sample from a plurality of luma samples of an area corresponding to the reference chroma sample.

FIG. 31 is a flowchart of a video decoding method according to a CCLM mode.

FIG. 32 is a flowchart of a video encoding method according to a CCLM mode.

BEST MODE

The disclosure provides a video decoding method including: determining an intra prediction mode of a current chroma block, from chroma intra prediction information obtained from a bitstream; when the intra prediction mode of the current chroma block according to the chroma intra prediction information is a cross component linear model (CCLM) mode, obtaining reference chroma samples adjacent to the current chroma block, and reference luma samples corresponding to the reference chroma samples; and predicting the current chroma block, based on a correlation between the reference chroma samples and the reference luma samples and a reference luma block corresponding to the current chroma block.

MODE OF DISCLOSURE

Advantages and features of embodiments and methods of accomplishing the same may be understood more readily by reference to the embodiments and the accompanying drawings. In this regard, the disclosure may have different forms and should not be construed as being limited to the embodiments set forth herein.

Rather, these embodiments are provided so that this disclosure will be thorough and complete and will fully convey the concept of the disclosure to one of ordinary skill in the art.

The terms used in the specification will be briefly defined, and the embodiments will be described in detail.

All terms including descriptive or technical terms which are used in the specification should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Therefore, the terms used in the disclosure should not be interpreted based on only their names but have to be defined based on the meaning of the terms together with the descriptions throughout the specification.

In the following specification, the singular forms include plural forms unless the context clearly indicates otherwise.

When a part "includes" or "comprises" an element, unless there is a particular description contrary thereto, the part may further include other elements, not excluding the other elements. In the following descriptions, terms such as "unit" indicate software or a hardware component such as a field-programmable gate array (FPGA) or an application-specific integrated circuit (ASIC), and the "unit" performs certain functions. However, the "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be divided into additional components and "units".

"current block" indicates one of a coding unit to be currently encoded or decoded, a prediction unit, and a transform unit. Also, "lower block" indicates a data unit split from "current block". "upper block" indicates a data unit including "current block".

Hereinafter, a "sample" denotes data assigned to a sampling position of an image, i.e., data to be processed. For example, pixel values of an image in a spatial domain and transform coefficients on a transform domain may be samples. A unit including at least one such sample may be defined as a block.

Hereinafter, the disclosure will now be described more fully with reference to the accompanying drawings for one of ordinary skill in the art to be able to perform the embodiments without any difficulty. In addition, portions irrelevant to the description will be omitted in the drawings for a clear description of the disclosure.

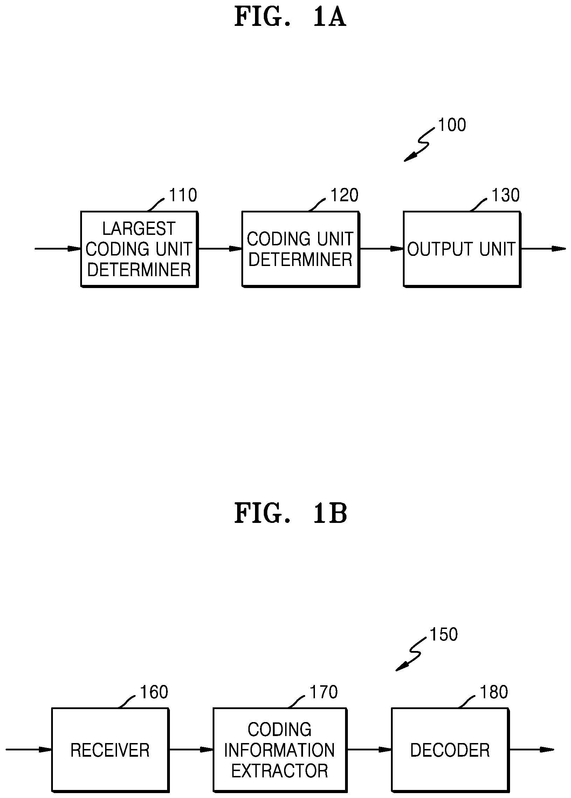

FIG. 1A is a block diagram of an image encoding apparatus 100 based on coding units having a tree structure according to an embodiment of the disclosure.

The image encoding apparatus 100 includes a largest coding unit determiner 110, a coding unit determiner 120, and an output unit 130.

The largest coding unit determiner 110 splits a picture or a slice included in the picture into a plurality of largest coding units according to a size of a largest coding unit. The largest coding unit may be a data unit having a size of 32x32, 64x64, 128x128, 256x256, or the like, wherein a shape of the data unit is a square shape having a width and length in powers of 2. The largest coding unit determiner 110 may provide largest coding unit size information indicating the size of the largest coding unit to the output unit 130. The output unit 130 may add the largest coding unit size information to a bitstream.

The coding unit determiner 120 determines coding units by splitting the largest coding unit. A coding unit may be determined by a largest coding unit and a depth. The depth may be defined as the number of times by which the coding unit is spatially split from the largest coding unit. Whenever the depth increases by 1, a coding unit is split into two or more coding units. Therefore, as the depth increases, a size of a coding unit for each depth is decreased. Whether to split a coding unit is determined according to whether splitting of the coding unit is efficient according to rate-distortion optimization. Then, split information indicating whether the coding unit is split may be generated. The split information may be represented in the form of a flag.

A coding unit may be split by using various methods. For example, a square coding unit may be split into four square coding units whose width and height are half those of the square coding unit. A square coding unit may be split into two rectangular coding units whose width is half that of the square coding unit. A square coding unit may be split into two rectangular coding units whose height is half that of the square coding unit. A square coding unit may be split into three coding units by splitting its width or height at 1:2:1.

A rectangular coding unit whose width is twice a height may be split into two square coding units. A rectangular coding unit whose width is twice a height may be split into two rectangular coding units whose width is four times a height. A rectangular coding unit whose width is twice a height may be split into two rectangular coding units and one square coding unit by splitting a width at 1:2:1.

Equally, a rectangular coding unit whose height is twice a width may be split into two square coding units. Also, a rectangular coding unit whose height is twice a width may be split into two rectangular coding units whose height is four times a width. Equally, a rectangular coding unit whose height is twice a width may be split into two rectangular coding units and one square coding unit by splitting its height at 1:2:1.

When the image encoding apparatus 100 can use two or more splitting methods, information about splitting methods that may be used for coding units from among the splitting methods that are usable by the image encoding apparatus 100 may be determined for each picture. Therefore, only specific splitting methods may be determined to be used for each picture. When the image encoding apparatus 100 uses only one splitting method, information about a splitting method that may be used for coding units is not separately determined.

When split information of a coding unit indicates that the coding unit is split, split shape information indicating a splitting method of the coding unit may be generated. When there is only one splitting method that may be used in a picture to which a coding unit belongs, split shape information may not be generated. When a splitting method is adaptively determined to encoding information around a coding unit, split shape information may not be generated.

A largest coding unit may be split to a smallest coding unit according to smallest coding unit size information. It may be defined that a depth of the largest coding unit is an uppermost depth and a depth of the smallest coding unit is a lowermost depth. Therefore, a coding unit of an upper depth may include a plurality of coding units of a lower depth.

As described above, image data of a current picture is split into largest coding units according to a maximum size of a coding unit. Each of the largest coding units may include coding units that are split according to depths. Because a largest coding unit is split according to depths, image data of a spatial domain included in the largest coding unit may be hierarchically split according to depths.

A maximum depth or a minimum size of a coding unit which limits a maximum number of times by which the largest coding unit is hierarchically splittable may be preset.

The coding unit determiner 120 compares coding efficiency when a coding unit is hierarchically split with coding efficiency when the coding unit is not split. Then, the coding unit determiner 120 determines whether to split the coding unit according to a result of the comparison. When it is determined that it is more efficient to split the coding unit, the coding unit determiner 120 splits the coding unit hierarchically. When it is determined that it is efficient not to split the coding unit according to the result of the comparison, the coding unit determiner 120 does not split the coding unit. Whether to split a coding unit may be determined regardless of whether adjacent coding units are split.

According to an embodiment, whether to split a coding unit may be first determined for a coding unit of a large depth in an encoding procedure. For example, a coding efficiency may be compared between a coding unit of a maximum depth and a coding unit smaller than the maximum depth by 1, and which one of coding units of a maximum depth and coding units smaller than the maximum depth by 1 is to be further efficiently encoded may be determined for each area of a largest coding unit. Then, according to a result of the determination, whether to split a coding unit smaller than the maximum depth by 1 may be determined for each area of the largest coding unit. Afterward, which one of coding units smaller than the maximum depth by 2 and a combination of the coding units smaller than the maximum depth by 1, which are selected based on the result of the determination, and coding units of a minimum depth is to be further efficiently encoded may be determined for each area of the largest coding unit. A same determination process is sequentially performed on coding units of a small depth, and finally, whether to split the largest coding unit is determined according to which one of the largest coding unit and a hierarchical structure generated by hierarchically splitting the largest coding unit is to be further efficiently encoded.

Whether to split a coding unit may be first determined for a coding unit of a small depth in an encoding procedure. For example, a coding efficiency may be compared between a largest coding unit and coding units of a depth greater than the largest coding unit by 1, and which one of the largest coding unit and the coding units of a depth greater than the largest coding unit by 1 is to be further efficiently encoded may be determined. In a case where coding efficiency of the largest coding unit is better, the largest coding unit is not split. In a case where coding efficiency of the coding units of a depth greater than the largest coding unit by 1 is better, the largest coding unit is split, and a same comparison process is repeatedly performed on split coding units.

When coding efficiency is first checked from a coding unit of a large depth, a high computation amount is required but a tree structure with high coding efficiency may be obtained. On the contrary, when coding efficiency is first checked from a coding unit of a small depth, a small computation amount is required but a tree structure with low coding efficiency may be obtained. Therefore, an algorithm for obtaining a hierarchical tree structure of a largest coding unit may be designed in various ways in consideration of coding efficiency and a computation amount.

The coding unit determiner 120 determines a prediction and transformation method that is most efficient for a coding unit so as to determine efficiency of the coding unit for each depth. The coding unit may be split into predetermined data units to determine the most efficient prediction and transformation method. The data units may have various shapes according to coding unit splitting methods. The coding unit splitting methods for determining the data units may be defined as partition modes. For example, when a coding unit of a size of 2Nx2N (where N is a positive integer) is not split, a size of a prediction unit included in the coding unit is 2Nx2N.

When a coding unit of a size of 2Nx2N is split, a size of a prediction unit included in the coding unit may be 2NxN, Nx2N, NxN, and the like according to a partition mode. The partition mode according to an embodiment may generate not only symmetrical data units obtained by splitting a height or a width of the coding unit at a symmetrical ratio but also generate data units split at an asymmetrical ratio such as 1:n or n:1, data units split in a diagonal direction, data units split into geometric shapes, and random-shape data units.

Prediction and transformation may be performed on the coding unit based on a data unit included in the coding unit. However, according to an embodiment, a data unit for prediction and a data unit for transformation may be separately determined. The data unit for prediction may be defined as a prediction unit, and the data unit for transformation may be defined as a transform unit. A partition mode to be applied to the prediction unit and a partition mode to be applied to the transform unit may be different from each other, and prediction using the prediction unit and transformation using the transform unit in the coding unit may be parallel and independently performed.

The coding unit may be split into one or more prediction units to determine an efficient prediction method. Equally, the coding unit may be split into one or more transform units to determine an efficient transformation method. Splitting using the prediction unit and splitting using the transform unit may be independently performed. However, when a reconstructed sample in the coding unit is used in intra prediction, a dependent relation is formed between prediction units or transform units included in the coding unit, and thus, splitting using the prediction unit and splitting using the transform unit may effect each other.

The prediction unit included in the coding unit may be predicted due to intra prediction or inter prediction. The intra prediction refers to a method of predicting samples of the prediction unit by using reference samples adjacent to the prediction unit. The inter prediction refers to a method of predicting samples of the prediction unit by obtaining a reference sample from a reference picture referred to by a current picture.

For intra prediction, the coding unit determiner 120 may select a most efficient intra prediction method by applying a plurality of intra prediction methods to the prediction unit. The intra prediction methods include a direct current (DC) mode, a planar mode, a directional mode such as a vertical mode and a horizontal mode, and the like.

When a reconstructed sample adjacent to a coding unit is used as a reference sample, intra prediction may be performed for each prediction unit. However, when a reconstructed sample in a coding unit is used as a reference sample, reconstruction of the reference sample in the coding unit has to precede prediction, and thus a prediction order of a prediction unit may depend on a transformation order of a transform unit. Therefore, when the reconstructed sample in the coding unit is used as the reference sample, only an intra prediction method for transform units corresponding to the prediction unit may be determined, and actual intra prediction may be performed on each transform unit.

The encoder 110 may select a most efficient inter prediction method by determining an optimal motion vector and an optimal reference picture. For inter prediction, the coding unit determiner 120 may determine a plurality of motion vector candidates from a coding unit that is spatially and temporally adjacent to a current coding unit, and may determine, from among the motion vector candidates, a most efficient motion vector as a motion vector. Equally, the coding unit determiner 120 may determine a plurality of reference picture candidates from the coding unit that is spatially and temporally adjacent to the current coding unit, and may determine a most efficient reference picture from among the reference picture candidates. According to an embodiment, the reference picture may be determined from reference picture lists that are pre-determined for a current picture. According to the embodiment, for accuracy of prediction, the most efficient motion vector from among the plurality of motion vector candidates may be determined as a motion vector predictor, and a motion vector may be determined by correcting the motion vector predictor. Inter prediction may be parallel performed on each prediction unit in the coding unit.

The coding unit determiner 120 may reconstruct a coding unit by obtaining only information indicating a motion vector and a reference picture according to a skip mode. According to the skip mode, all encoding information including a residual signal is skipped, except for the information indicating the motion vector and the reference picture. Because the residual signal is skipped, the skip mode may be used when accuracy of prediction is very high.

A partition mode to be used may be limited according to a prediction method for a prediction unit. For example, only partition modes for a prediction unit having a size of 2Nx2N or NxN may be applied to intra prediction, whereas partition modes for a prediction unit having a size of 2Nx2N, 2NxN, Nx2N, or NxN may be applied to inter prediction. In addition, only a partition mode for a prediction unit having a size of 2Nx2N may be applied to a skip mode of the inter prediction. A partition mode allowed for each prediction method in the image encoding apparatus 100 may vary according to coding efficiency.

The image encoding apparatus 100 may perform transformation based on a coding unit or a transform unit included in the coding unit. The image encoding apparatus 100 may transform residual data that is a difference value between an original value and a prediction value with respect to pixels included in a coding unit, through a predetermined process. For example, the image encoding apparatus 100 may perform lossy-compression on the residual data through quantization and discrete cosine transform (DCT)/discrete sine transform (DST). Alternatively, the image encoding apparatus 100 may perform lossless-compression on the residual data without quantization.

The image encoding apparatus 100 may determine a transform unit that is most efficient in quantization and transformation. In a manner similar to a coding unit according to a tree structure, a transform unit in a coding unit is recursively split into smaller transform units, such that residual data in the coding unit may be partitioned according to the transform units based on a tree structure according to depths. Then, the image encoding apparatus 100 may generate transformation split information about splitting of a coding unit and a transform unit according to a tree structure of the determined transform unit.

In the image encoding apparatus 100, a transformation depth may be set to indicate the number of times of splitting by which a height and a width of a coding unit are split to a transform unit. For example, a transformation depth may be set to 0 when a size of a transform unit of a current coding unit having a 2Nx2N-size is 2Nx2N, the transformation depth may be set to 1 when the size of the transform unit is NxN, and the transformation depth may be set to 2 when the size of the transform unit is N/2xN/2. That is, a transform unit according to a tree structure may be set according to a transformation depth.

In conclusion, the coding unit determiner 120 determines a most efficient prediction method for a current prediction unit from among a plurality of intra prediction methods and inter prediction methods. Then, the coding unit determiner 120 determines a prediction unit determination scheme according to coding efficiency based on a prediction result. Equally, the coding unit determiner 120 determines a transform unit determination scheme according to coding efficiency based on a transformation result. According to a most efficient prediction unit and transform unit determination scheme, coding efficiency of a coding unit is finally determined. The coding unit determiner 120 finalizes a hierarchical structure of a largest coding unit according to coding efficiency of a coding unit according to each depth.

The coding unit determiner 120 may measure coding efficiency of coding units according to depths, prediction efficiency of prediction methods, or the like by using rate-distortion optimization based on Lagrangian multipliers.

The coding unit determiner 120 may generate split information indicating whether to split a coding unit according to each depth according to the determined hierarchical structure of the largest coding unit. Then, the coding unit determiner 120 may generate, for split coding units, partition mode information for determining a prediction unit and transform unit split information for determining a transform unit. In addition, when the coding unit may be split by using at least two splitting methods, the coding unit determiner 120 may generate both split information and split shape information that indicates a splitting method. The coding unit determiner 120 may generate information about a prediction method and a transformation method that are used for the prediction unit and the transform unit.

The output unit 130 may output, in a bitstream, a plurality of pieces of information generated by the largest coding unit determiner 110 and the coding unit determiner 120 according to the hierarchical structure of the largest coding unit.

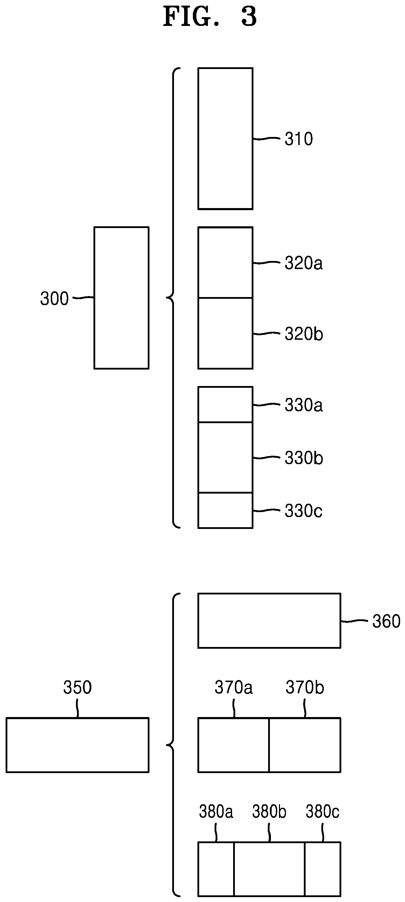

A method of determining a coding unit, a prediction unit, and a transform unit according to a tree structure of a largest coding unit according to an embodiment will be described below in detail with reference to FIGS. 3 to 12.

FIG. 1B is a block diagram of an image decoding apparatus 150 based on coding units having a tree structure according to an embodiment.

The image decoding apparatus 150 includes a receiver 160, a coding information extractor 170, and a decoder 180.

Definitions of the terms including a coding unit, a depth, a prediction unit, a transform unit, various split information, or the like for a decoding operation performed by the image decoding apparatus 150 are the same as those described above with reference to FIG. 1A and the image encoding apparatus 100. Also, because the image decoding apparatus 150 is designed to reconstruct image data, various encoding methods used by the image encoding apparatus 100 may be applied to the image decoding apparatus 150.

The receiver 160 receives and parses a bitstream regarding an encoded video. The coding information extractor 170 extracts, from the parsed bitstream, a plurality of pieces of information for decoding largest coding units, and provides the information to the decoder 180. The coding information extractor 170 may extract information about a maximum size of a coding unit of a current picture from a header, a sequence parameter set, or a picture parameter set of the current picture.

Furthermore, the coding information extractor 170 extracts, from the parsed bitstream, a final depth and split information of coding units having a tree structure according to each largest coding unit. The extracted final depth and the extracted split information are output to the decoder 180. The decoder 180 may determine a tree structure of the largest coding unit by splitting a largest coding unit according to the extracted final depth and the extracted split information.

The split information extracted by the coding information extractor 170 is split information of a tree structure determined by the image encoding apparatus 100 to cause a minimum coding error. Therefore, the image decoding apparatus 150 may reconstruct an image by decoding data according to a decoding method that causes the minimum coding error.

The coding information extractor 170 may extract split information of a data unit, such as a prediction unit and a transform unit included in a coding unit. For example, the coding information extractor 170 may extract information about a most efficient partition mode for a prediction unit. The coding information extractor 170 may extract transformation split information of a most efficient tree structure for a transform unit.

Also, the coding information extractor 170 may obtain information about a most efficient prediction method for prediction units split from a coding unit. Then, the coding information extractor 170 may obtain information about a most efficient transformation method for transform units split from a coding unit.

The coding information extractor 170 extracts information from a bitstream according to a method in which the output unit 130 of the image encoding apparatus 100 constructs the bitstream.

The decoder 180 may split a largest coding unit into coding units having a most efficient tree structure based on split information. Then, the decoder 180 may split a coding unit into prediction units according to information about a partition mode. The decoder 180 may split a coding unit into transform units according to transformation split information.

The decoder 180 may predict a prediction unit according to information about a prediction method. The decoder 180 may perform inverse quantization and inverse transformation on residual data that is a difference between an original value and a prediction value of a pixel according to information about a method of transforming a transform unit. The decoder 180 may reconstruct pixels of a coding unit according to a prediction result of the prediction unit and a transformation result of the transform unit.

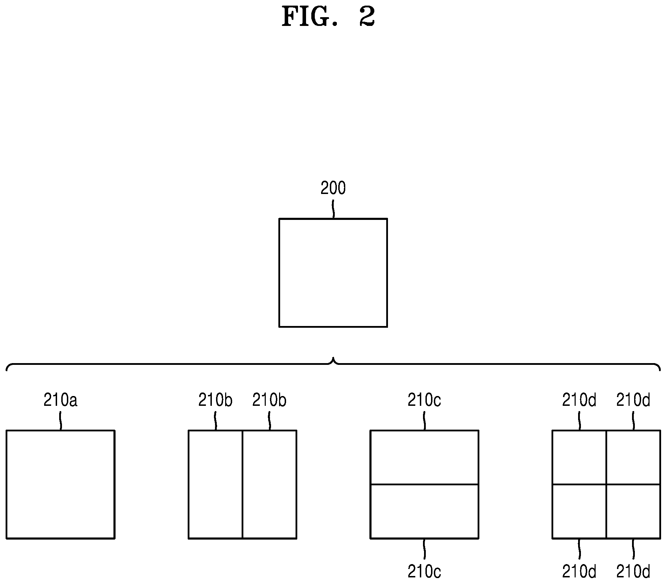

FIG. 2 illustrates a process, performed by the image decoding apparatus 150, of determining at least one coding unit by splitting a current coding unit according to an embodiment.

According to an embodiment, the image decoding apparatus 150 may determine a shape of a coding unit by using block shape information, and may determine a shape according to which the coding unit is to be split by using split shape information. That is, a coding unit splitting method, which is indicated by the split shape information, may be determined according to which block shape is indicated by the block shape information used by the image decoding apparatus 150.

According to an embodiment, the image decoding apparatus 150 may use the block shape information indicating that the current coding unit has a square shape. For example, the image decoding apparatus 150 may determine whether not to split a square coding unit, whether to vertically split the square coding unit, whether to horizontally split the square coding unit, or whether to split the square coding unit into four coding units according to the split shape information. Referring to FIG. 2, when block shape information of a current coding unit 200 indicates a square shape, the decoder 180 may not split a coding unit 210a having the same size as the current coding unit 200 according to split shape information indicating not to perform splitting, or may determine coding units 210b, 210c, and 210d split based on split shape information indicating a predetermined splitting method.

Referring to FIG. 2, the image decoding apparatus 150 may determine two coding units 210b obtained by vertically splitting the current coding unit 200 based on split shape information indicating to vertically perform splitting according to an embodiment. The image decoding apparatus 150 may determine two coding units 210c obtained by horizontally splitting the current coding unit 200 based on split shape information indicating to horizontally perform splitting. The image decoding apparatus 150 may determine four coding units 210d obtained by vertically and horizontally splitting the current coding unit 200 based on split shape information indicating to vertically and horizontally perform splitting. However, it should not be construed that a split shape for splitting a square coding unit is limited to the above shapes, and the split shape may include various shapes that may be indicated by split shape information. Split shapes for splitting a square coding unit will be described in detail below through various embodiments.

FIG. 3 illustrates a process, performed by the image decoding apparatus 150, of determining at least one coding unit by splitting a non-square coding unit according to an embodiment.

According to an embodiment, the image decoding apparatus 150 may use block shape information indicating that a current coding unit has a non-square shape. The image decoding apparatus 150 may determine, according to split shape information, whether not to split the current non-square coding unit or whether to split the non-square current coding unit by using a predetermined method. Referring to FIG. 3, when block shape information of a current coding unit 300 or 350 indicates a non-square shape, the image decoding apparatus 150 may not split a coding unit 310 or 360 having the same size as the current coding unit 300 or 350 according to split shape information indicating not to perform splitting, or may determine coding units 320a and 320b, 330a, 330b, and 330c, 370a and 370b, 380a, 380b, and 380c that are split according to split shape information indicating a predetermined splitting method. A predetermined splitting method of splitting a non-square coding unit will be described in detail below through various embodiments.

According to an embodiment, the image decoding apparatus 150 may determine a shape according to which a coding unit is to be split by using the split shape information, and in this case, the split shape information may indicate the number of at least one coding unit generated when the coding unit is split. Referring to FIG. 3, when the split shape information indicates that the current coding unit 300 or 350 is split into two coding units, the image decoding apparatus 150 may determine two coding units 320a and 320b or 370a and 370b, which are respectively included in the current coding unit 300 or 350 by splitting the current coding unit 300 or 350 based on the split shape information.

According to an embodiment, when the image decoding apparatus 150 splits the current coding unit 300 or 350 having the non-square shape based on the split shape information, the image decoding apparatus 150 may split the current coding unit 300 or 350 having the non-square shape, in consideration of a location of a long side of the current coding unit 300 or 350. For example, the image decoding apparatus 150 may determine a plurality of coding units by splitting the current coding unit 300 or 350 in a direction of splitting the long side of the current coding unit 300 or 350, in consideration of the shape of the current coding unit 300 or 350.

According to an embodiment, when the split shape information indicates that a coding unit is to be split into an odd number of blocks, the image decoding apparatus 150 may determine an odd number of coding units included in the current coding unit 300 or 350. For example, when the split shape information indicates that the current coding unit 300 or 350 is to be split into three coding units, the image decoding apparatus 150 may split the current coding unit 300 or 350 into three coding units 330a, 330b, and 330c or 380a, 380b, and 380c. According to an embodiment, the image decoding apparatus 150 may determine the odd number of coding units included in the current coding unit 300 or 350, and sizes of the determined coding units may not be uniform. For example, a size of the coding unit 330b or 380b from among the odd number of coding units 330a, 330b, and 330c or 380a, 380b, and 380c may be different from sizes of the coding units 330a and 330c or 380a and 380c. That is, coding units that may be determined when the current coding unit 300 or 350 is split may have multiple types with respect to a size.

According to an embodiment, when the split shape information indicates that a coding unit is to be split into an odd number of blocks, the image decoding apparatus 150 may determine an odd number of coding units included in the current coding unit 300 or 350 and may put a restriction on at least one coding unit from among the odd number of coding units generated by splitting the current coding unit 300 or 350. Referring to FIG. 3, the image decoding apparatus 150 may decode the coding unit 330b or 380b at the center of the three coding units 330a, 330b, and 330c or 380a, 380b, and 380c generated when the current coding unit 300 or 350 is split, in a different manner from the coding units 330a and 330c or 380a and 380c. For example, the image decoding apparatus 150 may restrict the coding unit 330b or 380b at the center not to be further split or to be split only a predetermined number of times, unlike the coding units 330a and 330c or 380a and 380c.

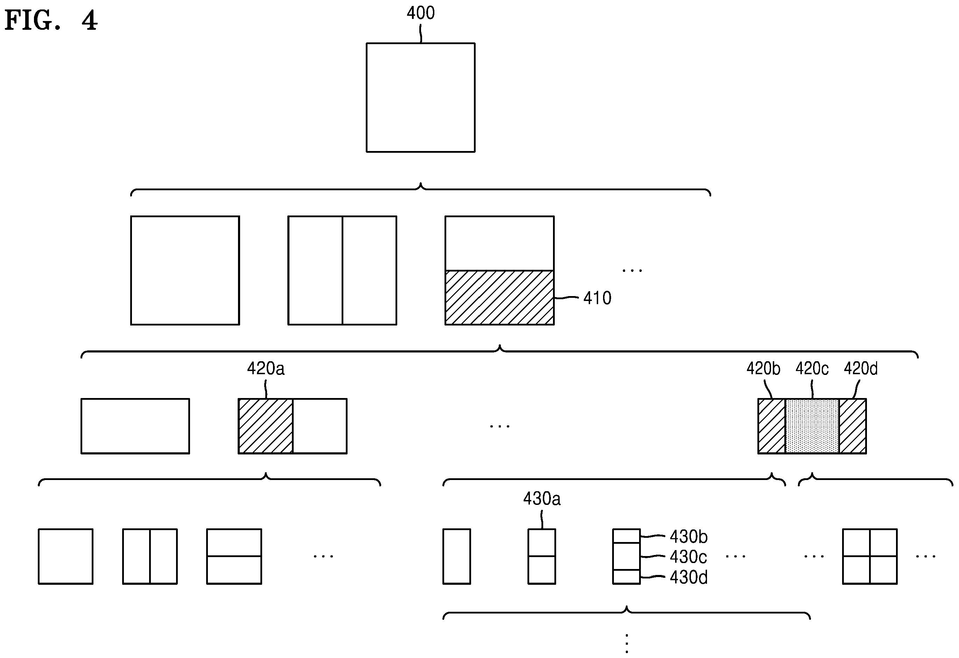

FIG. 4 illustrates a process, performed by the image decoding apparatus 150, of splitting a coding unit based on at least one of block shape information and split shape information according to an embodiment.

According to an embodiment, the image decoding apparatus 150 may determine to split or not to split a square first coding unit 400 into coding units based on at least one of the block shape information and the split shape information. According to an embodiment, when the split shape information indicates to split the first coding unit 400 in a horizontal direction, the image decoding apparatus 150 may determine a second coding unit 410 by splitting the first coding unit 400 in a horizontal direction. A first coding unit, a second coding unit, and a third coding unit used according to an embodiment are terms used to understand a relation before and after coding units are split. For example, the second coding unit may be determined by splitting the first coding unit, and the third coding unit may be determined by splitting the second coding unit. It will be understood that a relation among the first coding unit, the second coding unit, and the third coding unit is applied to the following descriptions.

According to an embodiment, the image decoding apparatus 150 may determine to split the second coding unit 410 into coding units, based on at least one of the block shape information and the split shape information, or may determine not to split the second coding unit 410. Referring to FIG. 4, the image decoding apparatus 150 may split the non-square second coding unit 410, which is determined by splitting the first coding unit 400, into one or more third coding units 420a, or 420b, 420c, and 420d based on at least one of the block shape information and the split shape information, or may not split the non-square second coding unit 410. The image decoding apparatus 150 may obtain at least one of the block shape information and the split shape information, and may obtain a plurality of various-shaped second coding units (e.g., 410) by splitting the first coding unit 400, based on at least one of the obtained block shape information and split shape information, and the second coding unit 410 may be split by using a splitting method of the first coding unit 400, based on at least one of the block shape information and the split shape information. According to an embodiment, when the first coding unit 400 is split into the second coding units 410 based on at least one of the block shape information and the split shape information of the first coding unit 400, the second coding unit 410 may also be split into the third coding units 420a, or 420b, 420c, and 420d based on at least one of the block shape information and the split shape information of the second coding unit 410. That is, a coding unit may be recursively split based on at least one of the block shape information and the split shape information of each coding unit. A method that may be used to recursively split the coding unit will be described below through various embodiments.

According to an embodiment, the image decoding apparatus 150 may determine to split each of the third coding units 420a, or 420b, 420c, and 420d into coding units, based on at least one of the block shape information and the split shape information, based on at least one of the block shape information and the split shape information, or may determine not to split the second coding unit 410. According to an embodiment, the image decoding apparatus 150 may split the non-square second coding unit 410 into the odd number of third coding units 420b, 420c, and 420d. The image decoding apparatus 150 may put a predetermined restriction on a third coding unit from among the odd number of third coding units 420b, 420c, and 420d. For example, the image decoding apparatus 150 may restrict the third coding unit 420c at a center location from among the odd number of third coding units 420b, 420c, and 420d to be no longer split or to be split a settable number of times. Referring to FIG. 4, the image decoding apparatus 150 may restrict the third coding unit 420c, which is at the center location from among the odd number of third coding units 420b, 420c, and 420d included in the non-square second coding unit 410, to be no longer split, to be split by using a predetermined splitting method (e.g., split into only four coding units or split into a shape corresponding to that into which the second coding unit 410 is split), or to be split only a predetermined number of times (e.g., split only n times (where n>0)). However, the restrictions on the third coding unit 420c at the center location are not limited to the above-described examples, and may include various restrictions for decoding the third coding unit 420c at the center location differently from the other third coding units 420b and 420d.

According to an embodiment, the image decoding apparatus 150 may obtain at least one of block shape information and split shape information, which is used to split a current coding unit, from a predetermined location in the current coding unit.

According to an embodiment, when a current coding unit is split into a predetermined number of coding units, the image decoding apparatus 150 may select one of the coding units. Various methods that may be used to select one of a plurality of coding units will be described below through various embodiments.

According to an embodiment, the image decoding apparatus 150 may split a current coding unit into a plurality of coding units, and may determine a coding unit at a predetermined location.

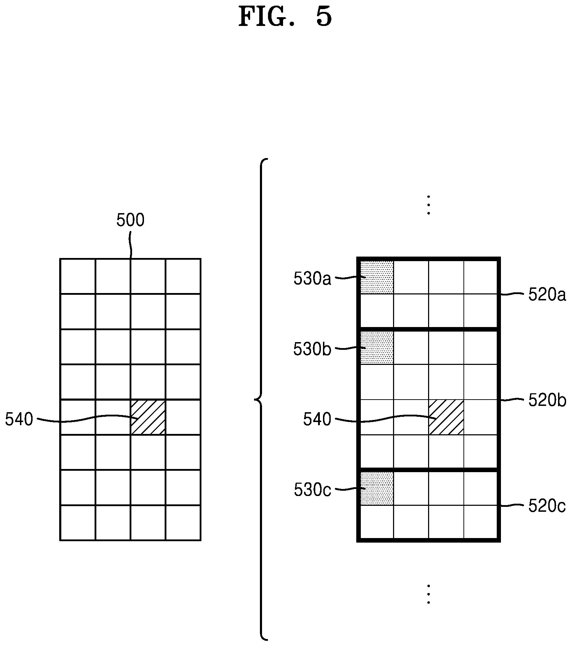

FIG. 5 illustrates a method, performed by the image decoding apparatus 150, of determining a coding unit of a predetermined location from among an odd number of coding units according to an embodiment.

According to an embodiment, the image decoding apparatus 150 may use information indicating each of locations of an odd number of coding units to determine a coding unit at a center location from among the odd number of coding units. Referring to FIG. 5, the image decoding apparatus 150 may determine an odd number of coding units 520a, 520b, and 520c by splitting a current coding unit 500. The image decoding apparatus 150 may determine the coding unit 520b at a center location by using information about locations of the odd number of coding units 520a, 520b, and 520c. For example, the image decoding apparatus 150 may determine the coding unit 520b of the center location by determining the locations of the coding units 520a, 520b, and 520c based on information indicating locations of predetermined samples included in the coding units 520a, 520b, and 520c. In detail, the image decoding apparatus 150 may determine the coding unit 520b at the center location by determining the locations of the coding units 520a, 520b, and 520c based on information indicating locations of top left samples 530a, 530b, and 530c of the coding units 520a, 520b, and 520c.

According to an embodiment, the information indicating the locations of the top left samples 530a, 530b, and 530c, which are included in the coding units 520a, 520b, and 520c, respectively, may include information about locations or coordinates of the coding units 520a, 520b, and 520c in a picture. According to an embodiment, the information indicating the locations of the top left samples 530a, 530b, and 530c, which are respectively included in the coding units 520a, 520b, and 520c, may include information indicating widths or heights of the coding units 520a, 520b, and 520c included in the current coding unit 500, and the widths or heights may correspond to information indicating a difference between the coordinates of the coding units 520a, 520b, and 520c in the picture. That is, the image decoding apparatus 150 may determine the coding unit 520b at the center location by directly using the information about the locations or coordinates of the coding units 520a, 520b, and 520c in the picture, or by using the information about the widths or heights of the coding units, which correspond to a difference value between the coordinates.

According to an embodiment, information indicating the location of the top left sample 530a of the upper coding unit 520a may include coordinates (xa, ya), information indicating the location of the top left sample 530b of the middle coding unit 520b may include coordinates (xb, yb), and information indicating the location of the top left sample 530c of the lower coding unit 520c may include coordinates (xc, yc). The image decoding apparatus 150 may determine the middle coding unit 520b by using the coordinates of the top left samples 530a, 530b, and 530c which are included in the coding units 520a, 520b, and 520c, respectively. For example, when the coordinates of the top left samples 530a, 530b, and 530c are sorted in an ascending or descending order, the coding unit 520b including the coordinates (xb, yb) of the sample 530b at a center location may be determined as a coding unit at a center location from among the coding units 520a, 520b, and 520c determined by splitting the current coding unit 500. However, the coordinates indicating the locations of the top left samples 530a, 530b, and 530c may include coordinates indicating absolute locations in the picture, or may use coordinates (dxb, dyb) indicating a relative location of the top left sample 530b of the middle coding unit 520b and coordinates (dxc, dyc) indicating a relative location of the top left sample 530c of the lower coding unit 520c, with reference to the location of the top left sample 530a of the upper coding unit 520a. Also, a method of determining a coding unit at a predetermined location by using coordinates of a sample included in the coding unit as information indicating a location of the sample is not limited to the above-described method, and may include various arithmetic methods capable of using the coordinates of the sample.

According to an embodiment, the image decoding apparatus 150 may split the current coding unit 500 into the plurality of coding units 520a, 520b, and 520c, and may select one of the coding units 520a, 520b, and 520c based on a predetermined criterion. For example, the image decoding apparatus 150 may select the coding unit 520b whose size is different from that of the others, from among the coding units 520a, 520b, and 520c.

According to an embodiment, the image decoding apparatus 150 may determine the widths or heights of the coding units 520a, 520b, and 520c by using the coordinates (xa, ya) indicating the location of the top left sample 530a of the upper coding unit 520a, the coordinates (xb, yb) indicating the location of the top left sample 530b of the middle coding unit 520b, and the coordinates (xc, yc) indicating the location of the top left sample 530c of the lower coding unit 520c. The image decoding apparatus 150 may determine respective sizes of the coding units 520a, 520b, and 520c by using the coordinates (xa, ya), (xb, yb), and (xc, yc) indicating the locations of the coding units 520a, 520b, and 520c.

According to an embodiment, the image decoding apparatus 150 may determine the width of the upper coding unit 520a to be xb-xa and the height of the upper coding unit 520a to be yb-ya. According to an embodiment, the image decoding apparatus 150 may determine the width of the middle coding unit 520b to be xc-xb and the height of the middle coding unit 520b to be yc-yb. According to an embodiment, the image decoding apparatus 150 may determine the width or height of the lower coding unit 520c by using the width or height of the current coding unit 500 and the widths and heights of the upper and middle coding units 520a and 520b. The image decoding apparatus 150 may determine a coding unit, which has a size different from that of the others, based on the determined widths and heights of the coding units 520a, 520b, and 520c. Referring to FIG. 5, the image decoding apparatus 150 may determine the middle coding unit 520b, which has a size different from the size of the upper and lower coding units 520a and 520c, to be the coding unit of the predetermined location. However, the above-described method, performed by the image decoding apparatus 150, of determining a coding unit having a size different from the size of the other coding units merely corresponds to an example of determining a coding unit at a predetermined location by using sizes of coding units, which are determined based on coordinates of samples, and thus various methods of determining a coding unit at a predetermined location by comparing sizes of coding units, which are determined based on coordinates of predetermined samples, may be used.

However, locations of samples considered to determine locations of coding units are not limited to the above-described top left locations, and information about arbitrary locations of samples included in the coding units may be used.

According to an embodiment, the image decoding apparatus 150 may select a coding unit at a predetermined location from among an odd number of coding units determined by splitting a current coding unit, in consideration of a shape of the current coding unit. For example, when the current coding unit whose width is longer than its height has a non-square shape, the image decoding apparatus 150 may determine the coding unit at the predetermined location in a horizontal direction. That is, the image decoding apparatus 150 may determine one of coding units at different locations in a horizontal direction and may put a restriction on the coding unit. When the current coding unit whose height is longer than its width has a non-square shape, the image decoding apparatus 150 may determine the coding unit at the predetermined location in a vertical direction. That is, the image decoding apparatus 150 may determine one of coding units at different locations in a vertical direction and may put a restriction on the coding unit.

According to an embodiment, the image decoding apparatus 150 may use information indicating respective locations of an even number of coding units, so as to determine the coding unit at the predetermined location from among the even number of coding units. The image decoding apparatus 150 may determine an even number of coding units by splitting the current coding unit, and may determine the coding unit at the predetermined location by using information about locations of the even number of coding units. An operation related thereto may correspond to the operation of determining a coding unit at a predetermined location (e.g., a center location) from among an odd number of coding units, which has been described in detail above with reference to FIG. 5, and thus detailed descriptions thereof are not provided here.

According to an embodiment, when a non-square current coding unit is split into a plurality of coding units, predetermined information about a coding unit at a predetermined location may be used in a splitting operation to determine the coding unit at the predetermined location from among the plurality of coding units. For example, the image decoding apparatus 150 may use at least one of block shape information and split shape information, which is stored in a sample included in a coding unit at a center location, in a splitting operation to determine the coding unit at the center location from among the plurality of coding units determined by splitting the current coding unit.

Referring to FIG. 5, the image decoding apparatus 150 may split the current coding unit 500 into the plurality of coding units 520a, 520b, and 520c based on at least one of the block shape information and the split shape information, and may determine the coding unit 520b at a center location from among the plurality of the coding units 520a, 520b, and 520c. Furthermore, the image decoding apparatus 150 may determine the coding unit 520b at the center location, in consideration of a location from which at least one of the block shape information and the split shape information is obtained. That is, at least one of the block shape information and the split shape information of the current coding unit 500 may be obtained from a sample 540 at a center location of the current coding unit 500 and, when the current coding unit 500 is split into the plurality of coding units 520a, 520b, and 520c based on at least one of the block shape information and the split shape information, the coding unit 520b including the sample 540 may be determined to be the coding unit at the center location. However, information used to determine the coding unit at the center location is not limited to at least one of the block shape information and the split shape information, and various kinds of information may be used to determine the coding unit at the center location.

According to an embodiment, predetermined information for identifying the coding unit at the predetermined location may be obtained from a predetermined sample included in a coding unit to be determined. Referring to FIG. 5, the image decoding apparatus 150 may use at least one of the block shape information and the split shape information, which is obtained from a sample at a predetermined location in the current coding unit 500 (e.g., a sample at a center location of the current coding unit 500) to determine a coding unit at a predetermined location from among the plurality of the coding units 520a, 520b, and 520c determined by splitting the current coding unit 500 (e.g., a coding unit at a center location from among a plurality of split coding units). That is, the image decoding apparatus 150 may determine the sample at the predetermined location by referring to a block shape of the current coding unit 500, may determine the coding unit 520b including a sample, from which predetermined information (e.g., at least one of the block shape information and the split shape information) may be obtained, from among the plurality of coding units 520a, 520b, and 520c determined by splitting the current coding unit 500, and may put a predetermined restriction on the coding unit 520b. Referring to FIG. 5, according to an embodiment, the image decoding apparatus 150 may determine the sample 540 at the center location of the current coding unit 500 as the sample from which the predetermined information may be obtained, and may put a predetermined restriction on the coding unit 520b including the sample 540, in a decoding operation. However, the location of the sample from which the predetermined information may be obtained is not limited to the above-described location, and may include arbitrary locations of samples included in the coding unit 520b to be determined for a restriction.

According to an embodiment, the location of the sample from which the predetermined information may be obtained may be determined based on a shape of the current coding unit 500. According to an embodiment, the block shape information may indicate whether the current coding unit has a square or non-square shape, and the location of the sample from which the predetermined information may be obtained may be determined based on the shape. For example, the image decoding apparatus 150 may determine a sample located on a boundary for splitting at least one of a width and height of the current coding unit in half, as the sample from which the predetermined information may be obtained, by using at least one of information about the width of the current coding unit and information about the height of the current coding unit. As another example, when the block shape information of the current coding unit indicates a non-square shape, the image decoding apparatus 150 may determine one of samples adjacent to a boundary for splitting a long side of the current coding unit in half, as the sample from which the predetermined information may be obtained.

According to an embodiment, when the current coding unit is split into a plurality of coding units, the image decoding apparatus 150 may use at least one of the block shape information and the split shape information so as to determine a coding unit at a predetermined location from among the plurality of coding units. According to an embodiment, the image decoding apparatus 150 may obtain at least one of the block shape information and the split shape information from a sample at a predetermined location in a coding unit, and may split the plurality of coding units, which are generated by splitting the current coding unit, by using at least one of the split shape information and the block shape information, which is obtained from the sample of the predetermined location in each of the plurality of coding units. That is, a coding unit may be recursively split based on at least one of the block shape information and the split shape information, which is obtained from the sample at the predetermined location in each coding unit. An operation of recursively splitting a coding unit has been described above with reference to FIG. 4, and thus detailed descriptions thereof will not be provided here.

According to an embodiment, the image decoding apparatus 150 may determine one or more coding units by splitting the current coding unit, and may determine an order of decoding the one or more coding units based on a predetermined block (e.g., the current coding unit).

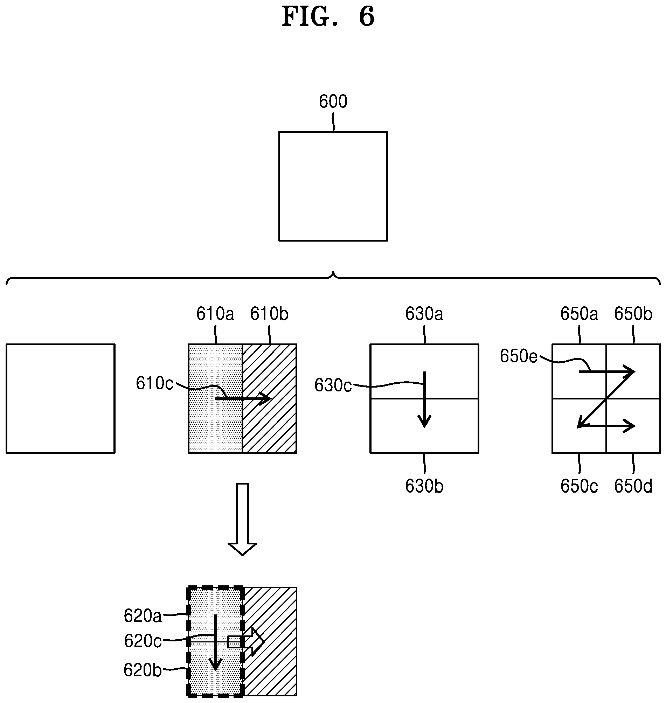

FIG. 6 illustrates an order of processing a plurality of coding units when the image decoding apparatus 150 determines the plurality of coding units by splitting a current coding unit according to an embodiment.

According to an embodiment, the image decoding apparatus 150 may determine second coding units 610a and 610b by splitting a first coding unit 600 in a vertical direction, may determine second coding units 630a and 630b by splitting the first coding unit 600 in a horizontal direction, or may determine second coding units 650a, 650b, 650c, and 650d by splitting the first coding unit 600 in vertical and horizontal directions, based on block shape information and split shape information.

Referring to FIG. 6, the image decoding apparatus 150 may determine to process the second coding units 610a and 610b, which are determined by splitting the first coding unit 600 in a vertical direction, in a horizontal direction order 610c. The image decoding apparatus 150 may determine to process the second coding units 630a and 630b, which are determined by splitting the first coding unit 600 in a horizontal direction, in a vertical direction order 630c. The image decoding apparatus 150 may determine the second coding units 650a, 650b, 650c, and 650d, which are determined by splitting the first coding unit 600 in vertical and horizontal directions, according to a predetermined order (e.g., a raster scan order or a Z-scan order 650e) by which coding units in a row are processed and then coding units in a next row are processed.

According to an embodiment, the image decoding apparatus 150 may recursively split coding units. Referring to FIG. 6, the image decoding apparatus 150 may determine the plurality of second coding units 610a and 610b, 630a and 630b, and 650a, 650b, 650c, and 650d by splitting the first coding unit 600, and may recursively split each of the determined plurality of second coding units 610a, 610b, 630a, 630b, 650a, 650b, 650c, and 650d. A method of splitting the plurality of second coding units 610a, 610b, 630a, 630b, 650a, 650b, 650c, and 650d may correspond to a method of splitting the first coding unit 600. Accordingly, each of the plurality of second coding units 610a, 610b, 630a, 630b, 650a, 650b, 650c, and 650d may be independently split into a plurality of coding units. Referring to FIG. 6, the image decoding apparatus 150 may determine the second coding units 610a and 610b by splitting the first coding unit 600 in a vertical direction, and may determine to independently split or not to split each of the second coding units 610a and 610b.

According to an embodiment, the image decoding apparatus 150 may determine third coding units 620a and 620b by splitting the left second coding unit 610a in a horizontal direction, and may not split the right second coding unit 610b.

According to an embodiment, a processing order of coding units may be determined based on an operation of splitting a coding unit. In other words, a processing order of split coding units may be determined based on a processing order of coding units immediately before being split. The image decoding apparatus 150 may determine a processing order of the third coding units 620a and 620b determined by splitting the left second coding unit 610a, independently of the right second coding unit 610b. Because the third coding units 620a and 620b are determined by splitting the left second coding unit 610a in a horizontal direction, the third coding units 620a and 620b may be processed in a vertical direction order 620c. Because the left and right second coding units 610a and 610b are processed in the horizontal direction order 610c, the right second coding unit 610b may be processed after the third coding units 620a and 620b included in the left second coding unit 610a are processed in the vertical direction order 620c. An operation of determining a processing order of coding units based on a coding unit before being split is not limited to the above-described example, and various methods may be used to independently process coding units, which are split and determined to various shapes, in a predetermined order.

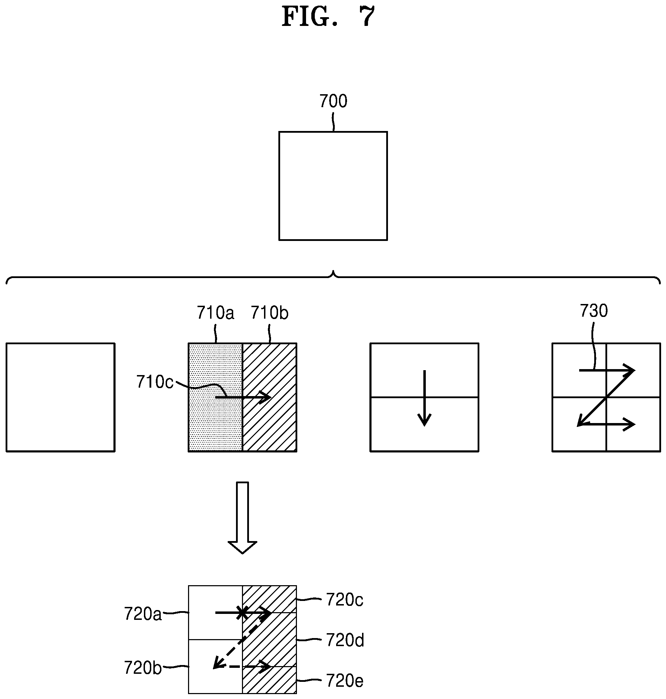

FIG. 7 illustrates a process, performed by the image decoding apparatus 150, of determining that a current coding unit is to be split into an odd number of coding units when the coding units are not processable in a predetermined order according to an embodiment.

According to an embodiment, the image decoding apparatus 150 may determine that the current coding unit is to be split into an odd number of coding units, based on obtained block shape information and split shape information. Referring to FIG. 7, a square first coding unit 700 may be split into non-square second coding units 710a and 710b, and the second coding units 710a and 710b may be independently split into third coding units 720a and 720b, and 720c, 720d, and 720e. According to an embodiment, the image decoding apparatus 150 may determine the plurality of third coding units 720a and 720b by splitting the left second coding unit 710a in a horizontal direction, and may split the right second coding unit 710b into an odd number of third coding units 720c, 720d, and 720e.

According to an embodiment, the image decoding apparatus 150 may determine whether any coding unit is split into an odd number of coding units, by determining whether the third coding units 720a and 720b, and 720c, 720d, and 720e are processable in a predetermined order. Referring to FIG. 7, the image decoding apparatus 150 may determine the third coding units 720a and 720b, and 720c, 720d, and 720e by recursively splitting the first coding unit 700. The image decoding apparatus 150 may determine whether any of the first coding unit 700, the second coding units 710a and 710b, and the third coding units 720a and 720b, and 720c, 720d, and 720e is to be split into an odd number of coding units, based on at least one of block shape information and split shape information. For example, a second coding unit located in the right from among the second coding units 710a and 710b may be split into an odd number of third coding units 720c, 720d, and 720e. A processing order of a plurality of coding units included in the first coding unit 700 may be a predetermined order (e.g., a Z-scan order 730), and the image decoding apparatus 150 may determine whether the third coding units 720c, 720d, and 720e, which are determined by splitting the right second coding unit 710b into an odd number of coding units, satisfy a condition for processing in the predetermined order.

According to an embodiment, the image decoding apparatus 150 may determine whether the third coding units 720a and 720b, and 720c, 720d, and 720e included in the first coding unit 700 satisfy the condition for processing in the predetermined order, and the condition relates to whether at least one of a width and height of the second coding units 710a and 710b is to be split in half along a boundary of the third coding units 720a and 720b, and 720c, 720d, and 720e. For example, although the third coding units 720a and 720b determined by splitting the height of the non-square left second coding unit 710a in half may satisfy the condition, because boundaries of the third coding units 720c, 720d, and 720e determined by splitting the right second coding unit 710b into three coding units do not split the width or height of the right second coding unit 710b in half, it may be determined that the third coding units 720c, 720d, and 720e do not satisfy the condition. When the condition is not satisfied as described above, the image decoding apparatus 150 may decide disconnection of a scan order, and may determine that the right second coding unit 710b is to be split into an odd number of coding units, based on a result of the decision. According to an embodiment, when a coding unit is split into an odd number of coding units, the image decoding apparatus 150 may put a predetermined restriction on a coding unit at a predetermined location from among the split coding units, and the restriction or the predetermined location has been described above through various embodiments and thus detailed descriptions thereof will not be provided here.

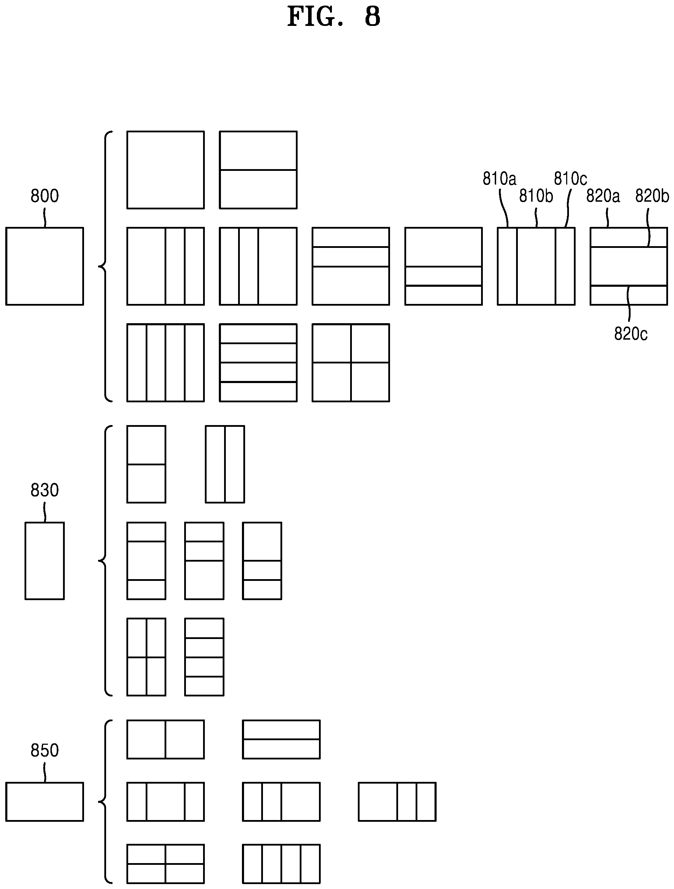

FIG. 8 illustrates a process, performed by the image decoding apparatus 150, of determining at least one coding unit by splitting a first coding unit 800 according to an embodiment. According to an embodiment, the image decoding apparatus 150 may split the first coding unit 800, based on at least one of block shape information and split shape information, which is obtained by the receiver 160. The square first coding unit 800 may be split into four square coding units, or may be split into a plurality of non-square coding units. For example, referring to FIG. 8, when the block shape information indicates that the first coding unit 800 has a square shape and the split shape information indicates to split the first coding unit 800 into non-square coding units, the image decoding apparatus 150 may split the first coding unit 800 into a plurality of non-square coding units. In detail, when the split shape information indicates to determine an odd number of coding units by splitting the first coding unit 800 in a horizontal direction or a vertical direction, the image decoding apparatus 150 may split the square first coding unit 800 into an odd number of coding units, e.g., second coding units 810a, 810b, and 810c determined by splitting the square first coding unit 800 in a vertical direction or second coding units 820a, 820b, and 820c determined by splitting the square first coding unit 800 in a horizontal direction.

According to an embodiment, the image decoding apparatus 150 may determine whether the second coding units 810a, 810b, and 810c, and 820a, 820b, and 820c which are included in the first coding unit 800 satisfy a condition for processing in a predetermined order, and the condition relates to whether at least one of a width and height of the first coding unit 800 is split in half along a boundary of the second coding units 810a, 810b, and 810c, and 820a, 820b, and 820c. Referring to FIG. 8, because boundaries of the second coding units 810a, 810b, and 810c determined by splitting the square first coding unit 800 in a vertical direction do not split the width of the first coding unit 800 in half, it may be determined that the first coding unit 800 does not satisfy the condition for processing in the predetermined order. In addition, because boundaries of the second coding units 820a, 820b, and 820c determined by splitting the square first coding unit 800 in a horizontal direction do not split the height of the first coding unit 800 in half, it may be determined that the first coding unit 800 does not satisfy the condition for processing in the predetermined order. When the condition is not satisfied as described above, the image decoding apparatus 150 may decide disconnection of a scan order, and may determine that the first coding unit 800 is to be split into an odd number of coding units, based on a result of the decision. According to an embodiment, when a coding unit is split into an odd number of coding units, the image decoding apparatus 150 may put a predetermined restriction on a coding unit at a predetermined location from among the split coding units, and the restriction or the predetermined location has been described above through various embodiments and thus detailed descriptions thereof will not be provided here.

According to an embodiment, the image decoding apparatus 150 may determine various-shaped coding units by splitting a first coding unit.

Referring to FIG. 8, the image decoding apparatus 150 may split the square first coding unit 800 or a non-square first coding unit 830 or 850 into various-shaped coding units.

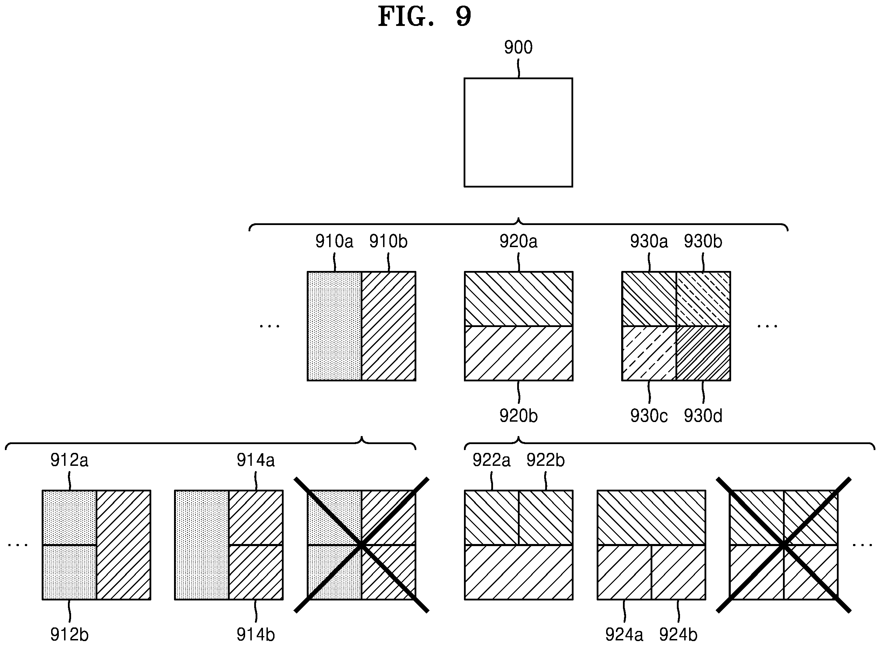

FIG. 9 illustrates that a shape into which a second coding unit is splittable by the image decoding apparatus 150 is restricted when a non-square second coding unit determined by splitting a first coding unit 900 satisfies a predetermined condition according to an embodiment.

According to an embodiment, the image decoding apparatus 150 may determine to split the square first coding unit 900 into non-square second coding units 910a, 910b, 920a, and 920b, based on at least one of block shape information and split shape information, which is obtained by the receiver 160. The second coding units 910a, 910b, 920a, and 920b may be independently split. As such, the image decoding apparatus 150 may determine to split the first coding unit 900 into a plurality of coding units, based on at least one of the block shape information and the split shape information of each of the second coding units 910a, 910b, 920a, and 920b, or may determine not to split the first coding unit 900. According to an embodiment, the image decoding apparatus 150 may determine third coding units 912a and 912b by splitting the non-square left second coding unit 910a, which is determined by splitting the first coding unit 900 in a vertical direction, in a horizontal direction. However, when the left second coding unit 910a is split in a horizontal direction, the image decoding apparatus 150 may restrict the right second coding unit 910b not to be split in a horizontal direction in which the left second coding unit 910a is split. When third coding units 914a and 914b are determined by splitting the right second coding unit 910b in the same direction, because the left and right second coding units 910a and 910b are independently split in a horizontal direction, the third coding units 912a and 912b, and 914a and 914b may be determined. However, this case serves equally as a case in which the image decoding apparatus 150 splits the first coding unit 900 into four square second coding units 930a, 930b, 930c, and 930d, based on at least one of the block shape information and the split shape information, and may be inefficient in terms of image decoding.

According to an embodiment, the image decoding apparatus 150 may determine third coding units 922a and 922b, or third coding units 924a and 924b by splitting the non-square second coding unit 920a or 920b, which is determined by splitting the first coding unit 900 in a horizontal direction, in a vertical direction. However, when a second coding unit (e.g., the upper second coding unit 920a) is split in a vertical direction, for the above-described reason, the image decoding apparatus 150 may restrict the other second coding unit (e.g., the lower second coding unit 920b) not to be split in a vertical direction in which the upper second coding unit 920a is split.

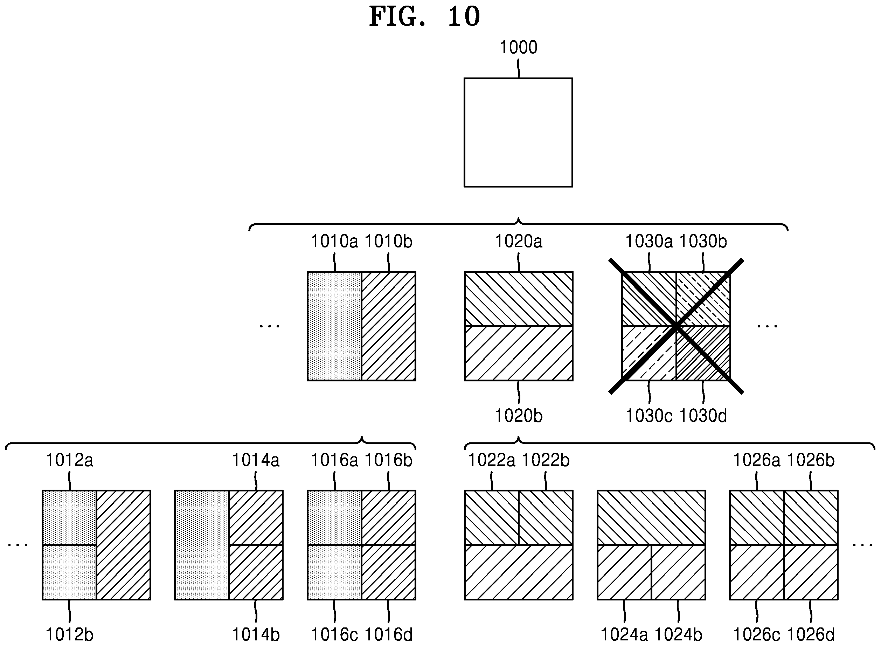

FIG. 10 illustrates a process, performed by the image decoding apparatus 150, of splitting a square coding unit when split shape information cannot indicate that the square coding unit is to be split into four square coding units according to an embodiment.

According to an embodiment, the image decoding apparatus 150 may determine second coding units 1010a, 1010b, 1020a, 1020b, etc. by splitting a first coding unit 1000, based on at least one of block shape information and split shape information. The split shape information may include information about various shapes by which a coding unit may be split, but, the information about various shapes may not be able to include information for splitting a coding unit into four square coding units. According to such split shape information, the image decoding apparatus 150 cannot split the first square coding unit 1000 into four square second coding units 1030a, 1030b, 1030c, and 1030d. The image decoding apparatus 150 may determine the non-square second coding units 1010a, 1010b, 1020a, 1020b, etc., based on the split shape information.

According to an embodiment, the image decoding apparatus 150 may independently split each of the non-square second coding units 1010a, 1010b, 1020a, 1020b, etc. Each of the second coding units 1010a, 1010b, 1020a, 1020b, etc. may be recursively split in a predetermined order, and this splitting method may correspond to a method of splitting the first coding unit 1000 based on at least one of the block shape information and the split shape information.

For example, the image decoding apparatus 150 may determine square third coding units 1012a and 1012b by splitting the left second coding unit 1010a in a horizontal direction, and may determine square third coding units 1014a and 1014b by splitting the right second coding unit 1010b in a horizontal direction. Furthermore, the image decoding apparatus 150 may determine square third coding units 1016a, 1016b, 1016c, and 1016d by splitting both the left and right second coding units 1010a and 1010b in a horizontal direction. In this case, coding units having the same shape as the four square second coding units 1030a, 1030b, 1030c, and 1030d split from the first coding unit 1000 may be determined.

As another example, the image decoding apparatus 150 may determine square third coding units 1022a and 1022b by splitting the upper second coding unit 1020a in a vertical direction, and may determine square third coding units 1024a and 1024b by splitting the lower second coding unit 1020b in a vertical direction. Furthermore, the image decoding apparatus 150 may determine square third coding units 1026a, 1026b, 1026c, and 1026d by splitting both the upper and lower second coding units 1020a and 1020b in a vertical direction. In this case, coding units having the same shape as the four square second coding units 1030a, 1030b, 1030c, and 1030d split from the first coding unit 1000 may be determined.

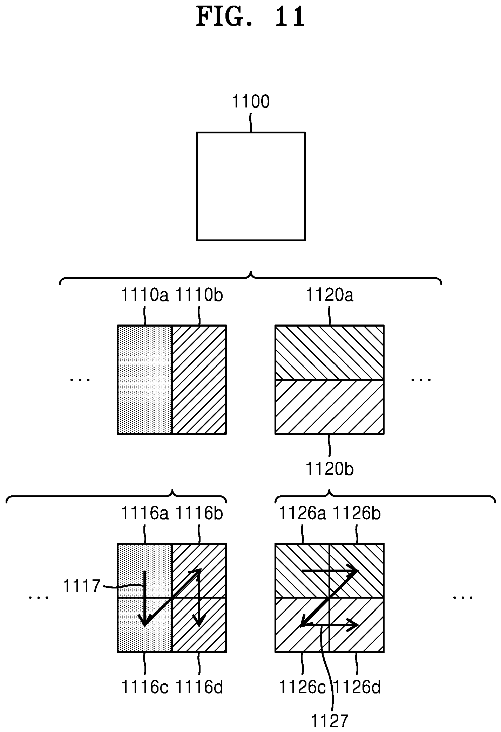

FIG. 11 illustrates that a processing order between a plurality of coding units may be changed depending on a process of splitting a coding unit according to an embodiment.

According to an embodiment, the image decoding apparatus 150 may split a first coding unit 1100 based on block shape information and split shape information. When the block shape information indicates a square shape and the split shape information indicates to split the first coding unit 1100 in at least one of horizontal and vertical directions, the image decoding apparatus 150 may determine second coding units (e.g., second coding units 1110a, 1110b, 1120a, 1120b, 1130a, 1130b, 1130c, 1130d, etc.) by splitting the first coding unit 1100. Referring to FIG. 11, the non-square second coding units 1110a, 1110b, 1120a, and 1120b determined by splitting the first coding unit 1100 in only a horizontal direction or vertical direction may be independently split based on the block shape information and the split shape information of each coding unit. For example, the image decoding apparatus 150 may determine third coding units 1116a, 1116b, 1116c, and 1116d by splitting the second coding units 1110a and 1110b, which are generated by splitting the first coding unit 1100 in a vertical direction, in a horizontal direction, and may determine third coding units 1126a, 1126b, 1126c, and 1126d by splitting the second coding units 1120a and 1120b, which are generated by splitting the first coding unit 1100 in a horizontal direction, in a vertical direction. An operation of splitting the second coding units 1110a, 1110b, 1120a, and 1120b is described above with reference to FIG. 9, and thus detailed descriptions thereof will not be provided here.

According to an embodiment, the image decoding apparatus 150 may process coding units in a predetermined order. An operation of processing coding units in a predetermined order has been described above with reference to FIG. 6, and thus detailed descriptions thereof will not be provided here. Referring to FIG. 11, the image decoding apparatus 150 may determine four square third coding units 1116a, 1116b, 1116c, and 1116d, and 1126a, 1126b, 1126c, and 1126d by splitting the square first coding unit 1100. According to an embodiment, the image decoding apparatus 150 may determine processing orders of the third coding units 1116a, 1116b, 1116c, and 1116d, and 1126a, 1126b, 1126c, and 1126d based on shapes by which the first coding unit 1100 is split.

According to an embodiment, the image decoding apparatus 150 may determine the third coding units 1116a, 1116b, 1116c, and 1116d by splitting the second coding units 1110a and 1110b generated by splitting the first coding unit 1100 in a vertical direction, in a horizontal direction, and may process the third coding units 1116a, 1116b, 1116c, and 1116d in a processing order 1117 for initially processing the third coding units 1116a and 1116c, which are included in the left second coding unit 1110a, in a vertical direction and then processing the third coding unit 1116b and 1116d, which are included in the right second coding unit 1110b, in a vertical direction.

According to an embodiment, the image decoding apparatus 150 may determine the third coding units 1126a, 1126b, 1126c, and 1126d by splitting the second coding units 1120a and 1120b generated by splitting the first coding unit 1100 in a horizontal direction, in a vertical direction, and may process the third coding units 1126a, 1126b, 1126c, and 1126d in a processing order 1127 for initially processing the third coding units 1126a and 1126b, which are included in the upper second coding unit 1120a, in a horizontal direction and then processing the third coding unit 1126c and 1126d, which are included in the lower second coding unit 1120b, in a horizontal direction.

Referring to FIG. 11, the square third coding units 1116a, 1116b, 1116c, and 1116d, and 1126a, 1126b, 1126c, and 1126d may be determined by splitting the second coding units 1110a, 1110b, 1120a, and 1120b, respectively. Although the second coding units 1110a and 1110b are determined by splitting the first coding unit 1100 in a vertical direction differently from the second coding units 1120a and 1120b which are determined by splitting the first coding unit 1100 in a horizontal direction, the third coding units 1116a, 1116b, 1116c, and 1116d, and 1126a, 1126b, 1126c, and 1126d split therefrom eventually show same-shaped coding units split from the first coding unit 1100. As such, by recursively splitting a coding unit in different manners based on at least one of the block shape information and the split shape information, the image decoding apparatus 150 may process a plurality of coding units in different orders even when the coding units are eventually determined to have the same shape.

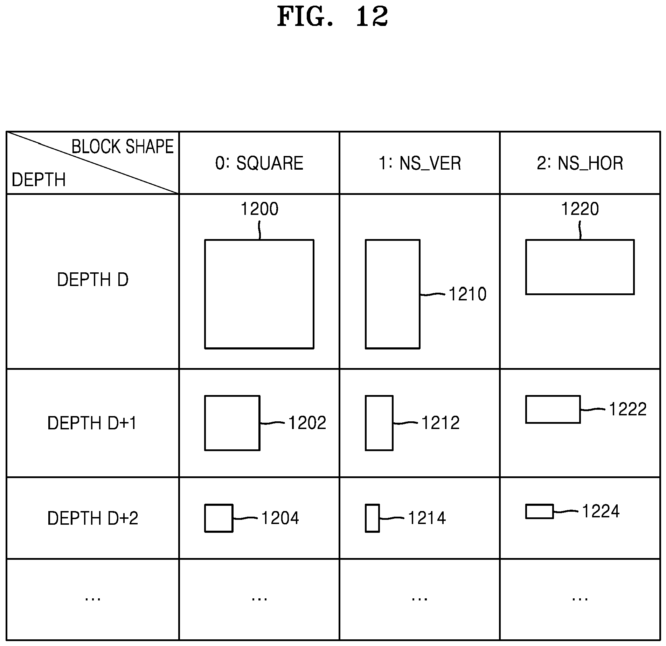

FIG. 12 illustrates a process of determining a depth of a coding unit as a shape and a size of the coding unit change, when the coding unit is recursively split such that a plurality of coding units are determined according to an embodiment.

According to an embodiment, the image decoding apparatus 150 may determine the depth of the coding unit based on a predetermined criterion. For example, the predetermined criterion may be the length of a long side of the coding unit. When the length of a long side of a coding unit before being split is 2n times (n>0) the length of a long side of a split current coding unit, the image decoding apparatus 150 may determine that a depth of the current coding unit is increased from a depth of the coding unit before being split, by n. In the following descriptions, a coding unit having an increased depth is represented as a coding unit of a deeper depth.

Referring to FIG. 12, according to an embodiment, the image decoding apparatus 150 may determine a second coding unit 1202, a third coding unit 1204, etc. of deeper depths by splitting a square first coding unit 1200 based on block shape information indicating a square shape (e.g., the block shape information may indicate '0: SQUARE'). Assuming that the size of the square first coding unit 1200 is 2N×2N, the second coding unit 1202 determined by splitting a width and height of the first coding unit 1200 in 1/2 may have a size of N×N. Furthermore, the third coding unit 1204 determined by splitting a width and height of the second coding unit 1202 in 1/2 may have a size of N/2×N/2. In this case, a width and height of the third coding unit 1204 correspond to 1/2 times those of the first coding unit 1200. When a depth of the first coding unit 1200 is D, a depth of the second coding unit 1202, the width and height of which are 1/2 times those of the first coding unit 1200, may be D+1, and a depth of the third coding unit 1204, the width and height of which are 1/2 times those of the first coding unit 1200, may be D+2.

According to an embodiment, the image decoding apparatus 150 may determine a second coding unit 1212 or 1222, a third coding unit 1214 or 1224, etc. of deeper depths by splitting a non-square first coding unit 1210 or 1220 based on block shape information indicating a non-square shape (e.g., the block shape information may indicate '1: NS_VER' indicating a non-square shape, a height of which is longer than its width, or as '2: NS_HOR' indicating a non-square shape, a width of which is longer than its height).

The image decoding apparatus 150 may determine the second coding unit 1202, 1212, or 1222 by splitting at least one of a width and height of the first coding unit 1210 having a size of N×2N. That is, the image decoding apparatus 150 may determine the second coding unit 1202 having a size of N×N or the second coding unit 1222 having a size of N×N/2 by splitting the first coding unit 1210 in a horizontal direction, or may determine the second coding unit 1212 having a size of N/2×N by splitting the first coding unit 1210 in horizontal and vertical directions.

According to an embodiment, the image decoding apparatus 150 may determine the second coding unit 1202, 1212, or 1222 by splitting at least one of a width and height of the first coding unit 1220 having a size of 2N×N. That is, the image decoding apparatus 150 may determine the second coding unit 1202 having a size of NxN or the second coding unit 1212 having a size of N/2×N by splitting the first coding unit 1220 in a vertical direction, or may determine the second coding unit 1222 having a size of N×N/2 by splitting the first coding unit 1220 in horizontal and vertical directions.

According to an embodiment, the image decoding apparatus 150 may determine the third coding unit 1204, 1214, or 1224 by splitting at least one of a width and height of the second coding unit 1202 having a size of N×N. That is, the image decoding apparatus 150 may determine the third coding unit 1204 having a size of N/2×N/2, the third coding unit 1214 having a size of N/2×N/2, or the third coding unit 1224 having a size of N/2×N/2 by splitting the second coding unit 1202 in vertical and horizontal directions.

According to an embodiment, the image decoding apparatus 150 may determine the third coding unit 1204, 1214, or 1224 by splitting at least one of a width and height of the second coding unit 1212 having a size of N/2×N. That is, the image decoding apparatus 150 may determine the third coding unit 1204 having a size of N/2×N/2 or the third coding unit 1224 having a size of N/2×N/2 by splitting the second coding unit 1212 in a horizontal direction, or may determine the third coding unit 1214 having a size of N/2×N/2 by splitting the second coding unit 1212 in vertical and horizontal directions.

According to an embodiment, the image decoding apparatus 150 may determine the third coding unit 1204, 1214, or 1224 by splitting at least one of a width and height of the second coding unit 1214 having a size of N×N/2. That is, the image decoding apparatus 150 may determine the third coding unit 1204 having a size of N/2×N/2 or the third coding unit 1214 having a size of N/2×N/2 by splitting the second coding unit 1212 in a vertical direction, or may determine the third coding unit 1224 having a size of N/2×N/2 by splitting the second coding unit 1212 in vertical and horizontal directions.

According to an embodiment, the image decoding apparatus 150 may split a square coding unit (e.g., 1200, 1202, or 1204) in a horizontal or vertical direction. For example, the image decoding apparatus 150 may determine the first coding unit 1210 having a size of N×2N by splitting the first coding unit 1200 having a size of 2N×2N in a vertical direction, or may determine the first coding unit 1220 having a size of 2N×N by splitting the first coding unit 1200 in a horizontal direction. According to an embodiment, when a depth is determined based on the length of a longest side of a coding unit, a depth of a coding unit determined by splitting the first coding unit 1200, 1202, or 1204 having a size of 2N×2N in a horizontal or vertical direction may be the same as a depth of the first coding unit 1200, 1202, or 1204.

According to an embodiment, a width and height of the third coding unit 1214 or 1224 may be 1/2 times those of the first coding unit 1210 or 1220. When a depth of the first coding unit 1210 or 1220 is D, a depth of the second coding unit 1212 or 1214, the width and height of which are 1/2 times those of the first coding unit 1210 or 1220, may be D+1, and a depth of the third coding unit 1214 or 1224, the width and height of which are 1/2 times those of the first coding unit 1210 or 1220, may be D+2.

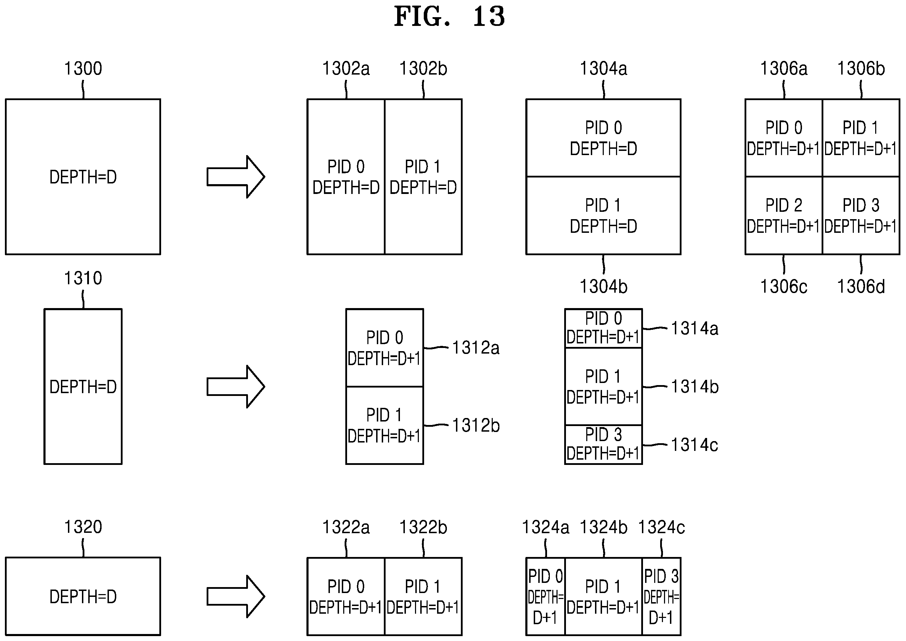

FIG. 13 illustrates depths that are determinable based on shapes and sizes of coding units, and part indexes (PIDs) that are for identifying the coding units according to an embodiment.

According to an embodiment, the image decoding apparatus 150 may determine various-shaped second coding units by splitting a square first coding unit 1300. Referring to FIG. 13, the image decoding apparatus 150 may determine second coding units 1302a and 1302b, 1304a and 1304b, and 1306a, 1306b, 1306c, and 1306d by splitting the first coding unit 1300 in at least one of vertical and horizontal directions based on split shape information. That is, the image decoding apparatus 150 may determine the second coding units 1302a and 1302b, 1304a and 1304b, and 1306a, 1306b, 1306c, and 1306d, based on the split shape information of the first coding unit 1300.

According to an embodiment, a depth of the second coding units 1302a and 1302b, 1304a and 1304b, and 1306a, 1306b, 1306c, and 1306d, which are determined based on the split shape information of the square first coding unit 1300, may be determined based on the length of a long side thereof. For example, because the length of a side of the square first coding unit 1300 is equal to the length of a long side of the non-square second coding units 1302a and 1302b, and 1304a and 1304b, the first coding unit 1300 and the non-square second coding units 1302a and 1302b, and 1304a and 1304b may have the same depth, e.g., D. However, when the image decoding apparatus 150 splits the first coding unit 1300 into the four square second coding units 1306a, 1306b, 1306c, and 1306d based on the split shape information, because the length of a side of the square second coding units 1306a, 1306b, 1306c, and 1306d is 1/2 times the length of a side of the first coding unit 1300, a depth of the second coding units 1306a, 1306b, 1306c, and 1306d may be D+1 which is deeper than the depth D of the first coding unit 1300 by 1.

According to an embodiment, the image decoding apparatus 150 may determine a plurality of second coding units 1312a and 1312b, and 1314a, 1314b, and 1314c by splitting a first coding unit 1310, a height of which is longer than its width, in a horizontal direction based on the split shape information. According to an embodiment, the image decoding apparatus 150 may determine a plurality of second coding units 1322a and 1322b, and 1324a, 1324b, and 1324c by splitting a first coding unit 1320, a width of which is longer than its height, in a vertical direction based on the split shape information.

According to an embodiment, a depth of the second coding units 1312a, 1312b, 1314a, 1314b, and 1314c, or 1322a, 1322b, 1324a, 1324b, and 1324c, which are determined based on the split shape information of the non-square first coding unit 1310 or 1320, may be determined based on the length of a long side thereof. For example, because the length of a side of the square second coding units 1312a and 1312b is 1/2 times the length of a side of the first coding unit 1310 having a non-square shape, a height of which is longer than its width, a depth of the square second coding units 1302a, 1302b, 1304a, and 1304b is D+1 which is deeper than the depth D of the non-square first coding unit 1310 by 1.

Furthermore, the image decoding apparatus 150 may split the non-square first coding unit 1310 into an odd number of second coding units 1314a, 1314b, and 1314c, based on the split shape information. The odd number of second coding units 1314a, 1314b, and 1314c may include the non-square second coding units 1314a and 1314c and the square second coding unit 1314b. In this case, because the length of a long side of the non-square second coding units 1314a and 1314c and the length of a side of the square second coding unit 1314b are 1/2 times the length of a side of the first coding unit 1310, a depth of the second coding units 1314a, 1314b, and 1314c may be D+1 which is deeper than the depth D of the first coding unit 1310 by 1. The image decoding apparatus 150 may determine depths of coding units split from the non-square first coding unit 1320, a width of which is longer than its height, by using the above-described method of determining depths of coding units split from the first coding unit 1310.

According to an embodiment, the image decoding apparatus 150 may determine PIDs for identifying split coding units, based on a size ratio between the coding units when an odd number of split coding units do not have equal sizes. Referring to FIG. 13, the coding unit 1314b of a center location among the odd number of split coding units 1314a, 1314b, and 1314c may have a width which is equal to that of the other coding units 1314a and 1314c and a height which is two times that of the other coding units 1314a and 1314c. That is, in this case, the coding unit 1314b at the center location may include two of the other coding units 1314a and 1314c. Therefore, when a PID of the coding unit 1314b at the center location is 1 based on a scan order, a PID of the coding unit 1314c located next to the coding unit 1314b may be increased by 2 and thus may be 3. That is, discontinuity in PID values may be present. According to an embodiment, the image decoding apparatus 150 may determine whether an odd number of split coding units do not have equal sizes based on whether discontinuity is present in PIDs for identifying the split coding units.

According to an embodiment, the image decoding apparatus 150 may determine whether to use a specific splitting method based on PID values for identifying a plurality of coding units determined by splitting a current coding unit. Referring to FIG. 13, the image decoding apparatus 150 may determine an even number of coding units 1312a and 1312b or an odd number of coding units 1314a, 1314b, and 1314c by splitting the first coding unit 1310 having a rectangular shape, a height of which is longer than its width. The image decoding apparatus 150 may use PIDs indicating respective coding units so as to identify the respective coding units. According to an embodiment, the PID may be obtained from a sample of a predetermined location (e.g., a top left sample) of each coding unit.

According to an embodiment, the image decoding apparatus 150 may determine a coding unit at a predetermined location from among the split coding units, by using the PIDs for identifying the coding units. According to an embodiment, when the split shape information of the first coding unit 1310 having a rectangular shape, a height of which is longer than its width, indicates to split a coding unit into three coding units, the image decoding apparatus 150 may split the first coding unit 1310 into three coding units 1314a, 1314b, and 1314c. The image decoding apparatus 150 may assign a PID to each of the three coding units 1314a, 1314b, and 1314c. The image decoding apparatus 150 may compare PIDs of an odd number of split coding units to determine a coding unit at a center location from among the coding units. The image decoding apparatus 150 may determine the coding unit 1314b having a PID corresponding to a median value among the PIDs of the coding units, as the coding unit at the center location from among the coding units determined by splitting the first coding unit 1310. According to an embodiment, the image decoding apparatus 150 may determine PIDs for identifying split coding units, based on a size ratio between the coding units when the split coding units do not have equal sizes. Referring to FIG. 13, the coding unit 1314b generated by splitting the first coding unit 1310 may have a width which is equal to that of the other coding units 1314a and 1314c and a height which is two times that of the other coding units 1314a and 1314c. In this case, when the PID of the coding unit 1314b at the center location is 1, the PID of the coding unit 1314c located next to the coding unit 1314b may be increased by 2 and thus may be 3. When the PID is not uniformly increased as described above, the image decoding apparatus 150 may determine that a coding unit is split into a plurality of coding units including a coding unit having a size different from that of the other coding units. According to an embodiment, when the split shape information indicates to split a coding unit into an odd number of coding units, the image decoding apparatus 150 may split a current coding unit in such a manner that a coding unit of a predetermined location (e.g., a coding unit of a center location) among an odd number of coding units has a size different from that of the other coding units. In this case, the image decoding apparatus 150 may determine the coding unit of the center location, which has a different size, by using PIDs of the coding units. However, the PID and the size or location of the coding unit of the predetermined location to be determined are not limited to the above-described examples, and various PIDs and various locations and sizes of coding units may be used.

According to an embodiment, the image decoding apparatus 150 may use a predetermined data unit where a coding unit starts to be recursively split.

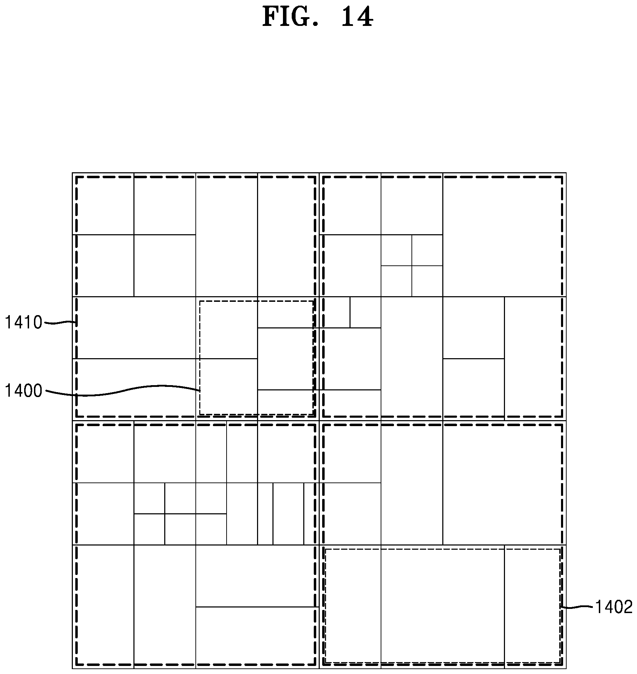

FIG. 14 illustrates that a plurality of coding units are determined based on a plurality of predetermined data units included in a picture according to an embodiment.

According to an embodiment, a predetermined data unit may be defined as a data unit where a coding unit starts to be recursively split by using at least one of block shape information and split shape information. That is, the predetermined data unit may correspond to a coding unit of an uppermost depth, which is used to determine a plurality of coding units split from a current picture. In the following descriptions, for convenience of explanation, the predetermined data unit is referred to as a reference data unit.

According to an embodiment, the reference data unit may have a predetermined size and a predetermined shape. According to an embodiment, the reference data unit may include MxN samples. Herein, M and N may be equal to each other, and may be integers expressed as powers of 2. That is, the reference data unit may have a square or non-square shape, and may be split into an integer number of coding units.

According to an embodiment, the image decoding apparatus 150 may split a current picture into a plurality of reference data units. According to an embodiment, the image decoding apparatus 150 may split the plurality of reference data units, which are split from the current picture, by using split shape information for each reference data unit. An operation of splitting the reference data unit may correspond to a splitting operation using a quadtree structure.

According to an embodiment, the image decoding apparatus 150 may previously determine a minimum size allowed for the reference data units included in the current picture. Accordingly, the image decoding apparatus 150 may determine various reference data units having sizes equal to or greater than the minimum size, and may determine one or more coding units by using the split shape information and block shape information with reference to the determined reference data units.

Referring to FIG. 14, the image decoding apparatus 150 may use a square reference coding unit 1400 or a non-square reference coding unit 1402. According to an embodiment, the shape and size of reference coding units may be determined based on various data units capable of including one or more reference coding units (e.g., sequences, pictures, slices, slice segments, largest coding units, or the like).

According to an embodiment, the receiver 160 of the image decoding apparatus 150 may obtain, from a bitstream, at least one of reference coding unit shape information and reference coding unit size information for each of the various data units. An operation of determining one or more coding units included in the square reference coding unit 1400 has been described above in relation to the operation of splitting the current coding unit 300 of FIG. 10, and an operation of determining one or more coding units included in the non-square reference coding unit 1402 has been described above in relation to the operation of splitting the current coding unit 1100 or 1150 of FIG. 11, and thus, detailed descriptions thereof will not be provided here.

According to an embodiment, the image decoding apparatus 150 may use a PID for identifying the size and shape of reference coding units, to determine the size and shape of reference coding units according to some data units previously determined based on a predetermined condition. That is, the receiver 160 may obtain, from the bitstream, only the PID for identifying the size and shape of reference coding units for each slice, slice segment, or largest coding unit which is a data unit satisfying a predetermined condition (e.g., a data unit having a size equal to or smaller than a slice) among the various data units (e.g., sequences, pictures, slices, slice segments, largest coding units, or the like). The image decoding apparatus 150 may determine the size and shape of reference data units for each data unit, which satisfies the predetermined condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be predetermined. That is, the image decoding apparatus 150 may determine at least one of the size and shape of reference coding units included in a data unit serving as a unit for obtaining the PID, by selecting the previously determined at least one of the size and shape of reference coding units based on the PID.

According to an embodiment, the image decoding apparatus 150 may use one or more reference coding units included in one largest coding unit. That is, a largest coding unit split from an image may include one or more reference coding units, and coding units may be determined by recursively splitting each reference coding unit. According to an embodiment, at least one of a width and height of the largest coding unit may be integer times at least one of the width and height of the reference coding units. According to an embodiment, the size of reference coding units may be obtained by splitting the largest coding unit n times based on a quadtree structure. That is, the image decoding apparatus 150 may determine the reference coding units by splitting the largest coding unit n times based on a quadtree structure, and may split the reference coding unit based on at least one of the block shape information and the split shape information according to various embodiments.

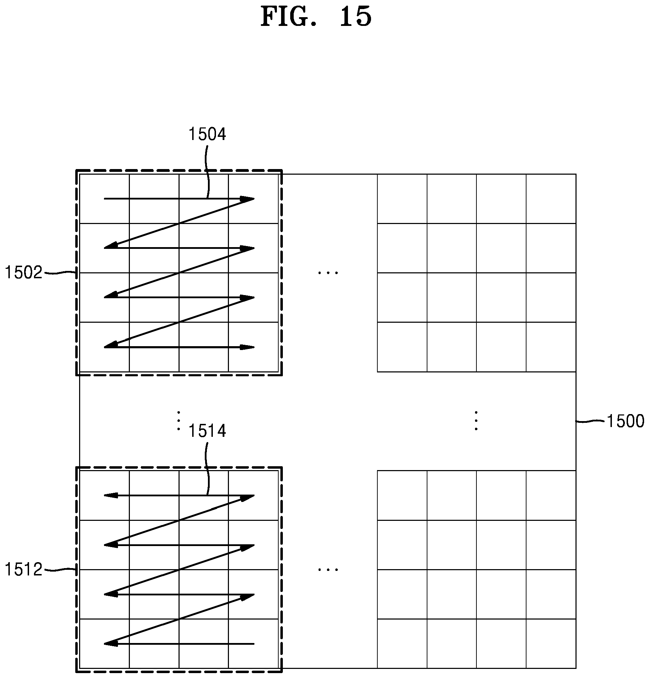

FIG. 15 illustrates a processing block serving as a unit for determining a determination order of reference coding units included in a picture 1500 according to an embodiment.

According to an embodiment, the image decoding apparatus 150 may determine one or more processing blocks split from a picture. The processing block is a data unit including one or more reference coding units split from an image, and the one or more reference coding units included in the processing block may be determined according to a specific order. That is, a determination order of one or more reference coding units determined in each processing block may correspond to one of various types of orders for determining reference coding units, and the determination order of one or more reference coding units determined in each processing block may vary depending on the processing block. The determination order of reference coding units, which is determined for each processing block, may be one of various orders, e.g., raster scan, Z-scan, N-scan, up-right diagonal scan, horizontal scan, and vertical scan, but is not limited to the above-mentioned scan orders.

According to an embodiment, the image decoding apparatus 150 may obtain processing block size information and may determine the size of one or more processing blocks included in the image. The image decoding apparatus 150 may obtain the processing block size information from a bitstream and may determine the size of one or more processing blocks included in the image. The size of processing blocks may be a predetermined size of data units, which is indicated by the processing block size information.

According to an embodiment, the receiver 160 of the image decoding apparatus 150 may obtain the processing block size information from the bitstream for each specific data unit. For example, the processing block size information may be obtained from the bitstream in a data unit such as an image, sequence, picture, slice, slice segment, or the like. That is, the receiver 160 may obtain the processing block size information from the bitstream for each of the various data units, the image decoding apparatus 150 may determine the size of one or more processing blocks, which are split from the picture by using the obtained processing block size information, and the size of the processing blocks may be integer times that of the reference coding units.

According to an embodiment, the image decoding apparatus 150 may determine the size of processing blocks 1502 and 1512 included in the picture 1500. For example, the image decoding apparatus 150 may determine the size of processing blocks based on the processing block size information obtained from the bitstream. Referring to FIG. 15, according to an embodiment, the image decoding apparatus 150 may determine the width of the processing blocks 1502 and 1512 to be four times the width of the reference coding units, and may determine the height of the processing blocks 1502 and 1512 to be four times the height of the reference coding units. The image decoding apparatus 150 may determine a determination order of one or more reference coding units in one or more processing blocks.

According to an embodiment, the image decoding apparatus 150 may determine the processing blocks 1502 and 1512, which are included in the picture 1500, based on the size of processing blocks, and may determine a determination order of one or more reference coding units included in the processing blocks 1502 and 1512. According to an embodiment, determination of reference coding units may include determination of the size of the reference coding units.

According to an embodiment, the image decoding apparatus 150 may obtain, from the bitstream, determination order information of one or more reference coding units included in one or more processing blocks, and may determine a determination order of one or more reference coding units based on the obtained determination order information. The determination order information may be defined as an order or direction for determining the reference coding units in the processing block. That is, the determination order of reference coding units may be independently determined for each processing block.

According to an embodiment, the image decoding apparatus 150 may obtain, from the bitstream, the determination order information of reference coding units for each specific data unit. For example, the receiver 160 may obtain the determination order information of reference coding units from the bitstream according to each data unit such as an image, sequence, picture, slice, slice segment, or processing block. Because the determination order information of reference coding units indicates an order for determining reference coding units in a processing block, the determination order information may be obtained for each specific data unit including an integer number of processing blocks.

According to an embodiment, the image decoding apparatus 150 may determine one or more reference coding units based on the determined determination order.

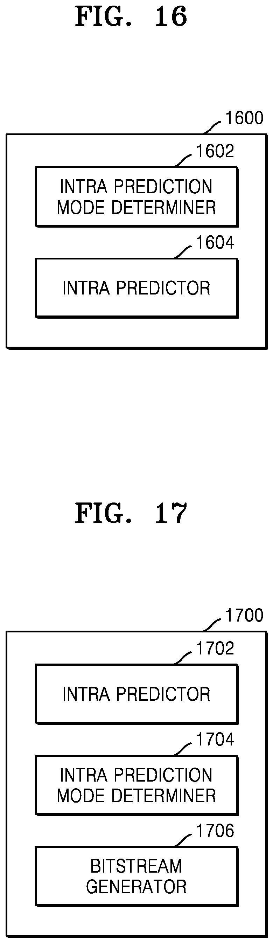

According to an embodiment, the receiver 160 may obtain the determination order information of reference coding units from the bitstream as information related to the processing blocks 1502 and 1512, and the image decoding apparatus 150 may determine a determination order of one or more reference coding units included in the processing blocks 1502 and 1512 and may determine one or more reference coding units, which are included in the picture 1500, based on the determination order of the reference coding units. Referring to FIG. 15, the image decoding apparatus 150 may determine determination orders 1504 and 1514 of one or more reference coding units in the processing blocks 1502 and 1512, respectively. For example, when the determination order information of reference coding units is obtained for each processing block, different types of the determination order information of reference coding units may be obtained for the processing blocks 1502 and 1512. When the determination order 1504 of reference coding units in the processing block 1502 is a raster scan order, reference coding units included in the processing block 1502 may be determined according to the raster scan order. On the contrary, when the determination order 1514 of reference coding units in the other processing block 1512 is a backward raster scan order, reference coding units included in the processing block 1512 may be determined according to the backward raster scan order. With reference to FIGS. 1A to 15, a method of splitting an image into largest coding units and splitting the largest coding units into coding units having a hierarchical tree structure is described. With reference to FIGS. 16 to 32, embodiments of a method of predicting a chroma block according to a CCLM mode will now be described.

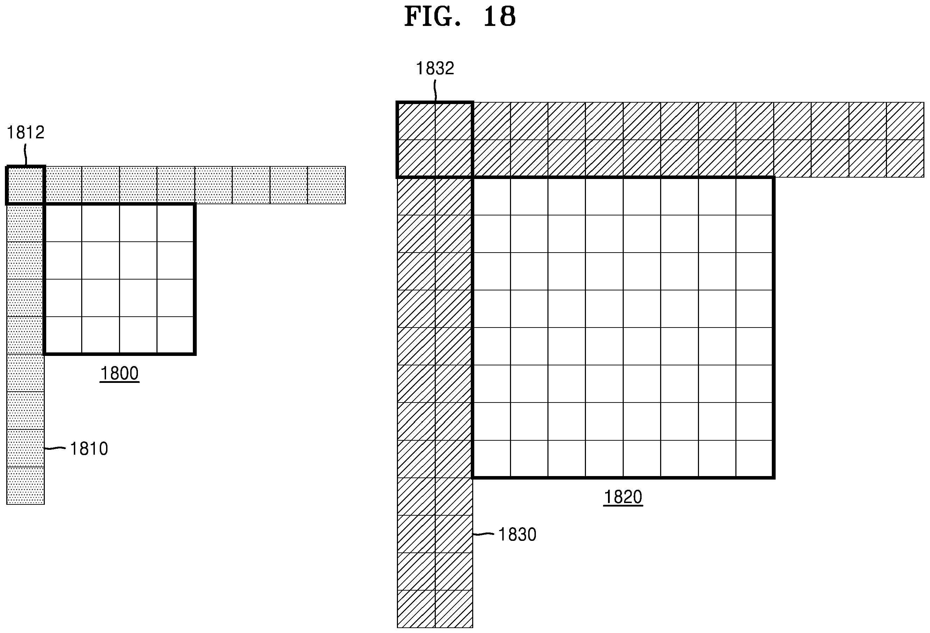

FIG. 16 provides a video decoding apparatus 1600 using chroma block prediction according to a cross component linear model (CCLM) mode. The CCLM mode provides a method of predicting a current chroma block from a reference luma block referred to by the current chroma block, according to a luma chroma linear model obtained from samples adjacent to the current chroma block. The method of predicting a current chroma block according to the CCLM mode will be described in detail with reference to FIG. 18.

The video decoding apparatus 1600 includes an intra prediction mode determiner 1602 and an intra predictor 1604. The intra prediction mode determiner 1602 determines an intra prediction mode to be applied to a plurality of blocks split from a video image. Then, the intra predictor 1604 intra predicts the plurality of blocks according to the intra prediction mode determined by the intra prediction mode determiner 1602. FIG. 16 illustrates that only the intra prediction mode determiner 1602 and the intra predictor 1604 related to intra prediction according to the CCLM mode are included in the video decoding apparatus 1600, but, according to an embodiment, the video decoding apparatus 1600 may further include other components required to decode a video.

The intra prediction mode determiner 1602 may determine an intra prediction mode of a current chroma block, from chroma intra prediction information obtained from a bitstream. The chroma intra prediction information may be set to indicate one of a DC mode, a planar mode, a vertical mode, a horizontal mode, the CCLM mode, an intra prediction mode of a reference luma block corresponding to the current chroma block, and the like.

According to an embodiment, when the intra prediction mode of the current chroma block according to the chroma intra prediction information is the CCLM mode, the intra prediction mode determiner 1602 may obtain, from the bitstream, CCLM mode information indicating locations of reference chroma samples. Then, the intra prediction mode determiner 1602 may obtain the reference chroma samples, based on CCLM mode reference locations according to the CCLM mode information. Then, the intra prediction mode determiner 1602 may obtain reference luma samples corresponding to the reference chroma samples.

According to an embodiment, the CCLM mode information may indicate one of a left CCLM mode indicating that the CCLM mode reference locations are present in the left and lower-left sides of the current chroma block, an upper CCLM mode indicating that the CCLM mode reference locations are present in the upper and upper-right sides of the current chroma block, and an upper-left CCLM mode indicating that the CCLM mode reference locations are present in the left and upper sides of the current chroma block.

According to an embodiment, the CCLM mode information may not be included in the bitstream. When the CCLM mode information is not used or is not included in the bitstream, the intra prediction mode determiner 1602 may determine the CCLM mode reference locations, according to a default CCLM mode. The default CCLM mode may be set to be one of the left CCLM mode, the upper CCLM mode, and the upper-left CCLM mode.

When the intra prediction mode of the current chroma block according to the chroma intra prediction information is the CCLM mode, the intra predictor 1604 may obtain reference chroma samples adjacent to the current chroma block, and reference luma samples corresponding to the reference chroma samples.

According to an embodiment, the reference chroma samples are selected among chroma samples adjacent to the current chroma block. The reference chroma samples are located at predetermined CCLM mode reference locations adjacent to the current chroma block. Accordingly, the reference chroma samples are determined to be chroma samples that are at the predetermined CCLM mode reference locations and are adjacent to the current chroma block.

According to an embodiment, the number of the predetermined CCLM mode reference locations may be set to be constant, regardless of a size of the current chroma block. According to another embodiment, the number of CCLM mode reference locations may be set according to a size of the current chroma block. For example, the number of the CCLM mode reference locations may be set in proportion to the size of the current chroma block.

According to an embodiment, the predetermined CCLM mode reference locations may include locations of a first upper reference chroma sample located farthest right, a second upper reference chroma sample located in the middle, and a third upper reference chroma sample located farthest left from among chroma samples immediately adjacent to an upper side of the current chroma block, and locations of a first left reference chroma sample located at the top, a second left reference chroma sample located in the middle, and a third left reference chroma sample located at the bottom from among chroma samples immediately adjacent to a left side of the current chroma block.

According to an embodiment, the predetermined CCLM mode reference locations may include locations of a fourth upper reference chroma sample located between a chroma sample located farthest left and a chroma sample in the middle and a fifth upper reference chroma sample located between a chroma sample located farthest right and the chroma sample in the middle from among the chroma samples immediately adjacent to the upper side of the current chroma block, and locations of a fourth left reference chroma sample located between a chroma sample at the top and a chroma sample in the middle and a fifth left reference chroma sample located between a chroma sample at the bottom and the chroma sample in the middle from among the chroma samples immediately adjacent to the left side of the current chroma block.

According to an embodiment, when a chroma sample is not available at a predetermined CCLM mode reference location, a chroma sample may be obtained from a CCLM mode default reference location. Alternatively, instead, a chroma sample having a default value may be used for the CCLM mode. Alternatively, instead, a chroma sample that is closest to the predetermined CCLM mode reference location may be used for the CCLM mode.

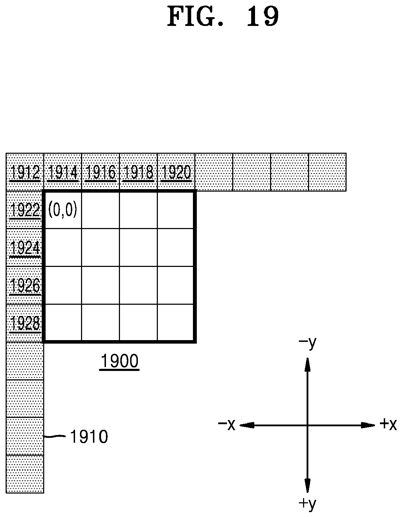

Various embodiments of CCLM mode reference locations will be described with reference to FIGS. 19 to 29.

According to an embodiment, when the CCLM mode information is obtained from the bitstream, the intra predictor 1604 may determine CCLM mode reference locations according to a CCLM mode indicated by the CCLM mode information.

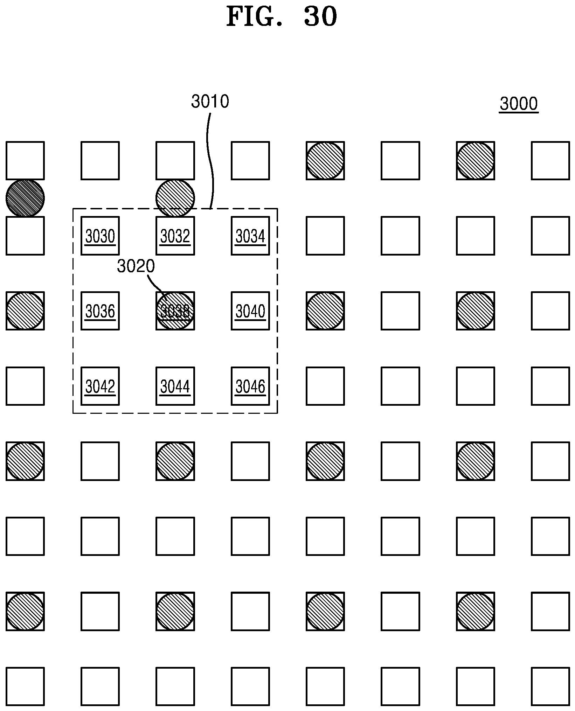

The intra predictor 1604 determines reference luma samples according to locations of reference chroma samples. According to an embodiment, the reference luma samples may be obtained by subsampling luma samples according to a color format, the luma samples corresponding to the locations of the reference chroma samples. Alternatively, one of one or more of luma samples corresponding to the locations of the reference chroma samples may be determined to be the reference luma samples. Various embodiments of a method of determining a reference luma sample will be described with reference to FIG. 30.

According to an embodiment, a correlation between reference chroma samples and reference luma samples may be determined by determining luma-chroma sample pairs according to a location of a reference chroma sample and a location of a reference luma sample, and determining a linear model of a luma sample and a chroma sample according to the luma-chroma sample pairs.

According to an embodiment, the linear model of the luma sample and the chroma sample may be determined according to linear regression analysis based on the luma-chroma sample pairs.

According to an embodiment, the linear model of the luma sample and the chroma sample may be determined according to a first representative luma sample value, a first representative chroma sample value, a second representative luma sample value, and a second representative chroma sample value.

According to an embodiment, the first representative luma sample value and the first representative chroma sample value may be determined from a luma-chroma sample pair having a maximum luma sample value from among the luma-chroma sample pairs. The second representative luma sample value and the second representative chroma sample value may be determined from a luma-chroma sample pair having a minimum luma sample value from among the luma-chroma sample pairs.

According to an embodiment, the first representative luma sample value and the first representative chroma sample value may be determined from a first luma-chroma sample pair group, and the second representative luma sample value and the second representative chroma sample value may be determined from a second luma-chroma sample pair group. The first luma-chroma sample pair group may include luma-chroma sample pairs having a large luma sample value from among the luma-chroma sample pairs. Also, the second luma-chroma sample pair group may include luma-chroma sample pairs having a small luma sample value from among the luma-chroma sample pairs.

For example, when the linear model of the luma sample and the chroma sample is determined from four luma-chroma sample pairs, the first representative chroma sample value and the first representative luma sample value may be determined from two luma-chroma sample pairs having a large chroma sample value, and the second representative chroma sample value and the second representative luma sample value may be determined from two luma-chroma sample pairs having a small chroma sample value.

According to an embodiment, a scaling parameter (A) and an offset parameter (β) of the linear model may be determined from a first representative luma sample value ($X_b$), a first representative chroma sample value ($X_a$), a second representative luma sample value ($Y_b$), and a second representative chroma sample value ($Y_a$). Equation 1 below indicates a calculation formula of the scaling parameter (A), and Equation 2 below indicates a calculation formula of the offset parameter (β).

[Equation 1]

$$A = \frac{Y_a - Y_b}{X_a - X_b}$$

[Equation 2]

$$\beta = Y_b - \alpha \cdot X_b$$

The intra predictor 1604 may predict a current chroma block, based on a correlation between reference chroma samples and reference luma samples and a reference luma block corresponding to the current chroma block. The reference luma block is decoded before the current chroma block, and a location of the reference luma block corresponds to a location of the current chroma block. A chroma sample of the current chroma block is determined by applying a sample value of a corresponding luma sample to the linear model of the luma sample and the chroma sample.

For example, a chroma sample (predc (i,j)) of the current chroma block may be determined according to a luma sample ($rec_L$'(i,j)) of a reference luma block, based on the scaling parameter (A) and the offset parameter (β). Equation 3 below indicates a linear relation between the chroma sample (predc (i,j)) of the current chroma block and the luma sample ($rec_L$'(i,j)) of a reference luma block.

[Equation 3]

$$pred_c(i,j) = \alpha \cdot rec_L'(i,j) + \beta$$

The intra prediction mode determiner 1602 and the intra predictor 1604 of the video decoding apparatus 1600 may include one or more instructions for performing a video decoding method of the video decoding apparatus 1600. The intra prediction mode determiner 1602 and the intra predictor 1604 of the video decoding apparatus 1600 may be implemented as a program including the one or more instructions. The video decoding apparatus 1600 may include one or more memory devices storing the program and one or more processors configured to perform the one or more instructions of the program. The program including the one or more instructions may be stored in a computer-recordable storage medium.

FIG. 17 provides a video encoding apparatus 1700 using chroma block prediction according to a CCLM mode.

The video encoding apparatus 1700 includes an intra predictor 1702, an intra prediction mode determiner 1704, and a bitstream generator 1706. The intra predictor 1702 intra predicts a current chroma block included in a video image, according to various intra prediction modes. The intra prediction mode determiner 1704 determines a most efficient intra prediction mode to be an intra prediction mode of the current chroma block, according to intra prediction results of the various intra prediction modes. The bitstream generator 1706 generates a bitstream including chroma intra prediction information indicating the intra prediction mode of the current chroma block.

FIG. 17 illustrates that only the intra predictor 1702, the intra prediction mode determiner 1704, and the bitstream generator 1706 related to intra prediction according to the CCLM mode are included in the video encoding apparatus 1700, but, according to an embodiment, the video encoding apparatus 1700 may further include other components required to encode a video.

The intra predictor 1702 predicts the current chroma block, according to the CCLM mode. For prediction based on the CCLM mode, the intra predictor 1702 obtains reference chroma samples adjacent to the current chroma block, and reference luma samples corresponding to the reference chroma samples. Then, the intra predictor 1702 predicts the current chroma block, based on a correlation between the reference chroma samples and the reference luma samples, and a reference luma block corresponding to the current chroma block.

The intra prediction mode determiner 1704 determines whether the CCLM mode is to be applied to the current chroma block, according to a prediction result with respect to the current chroma block according to the CCLM mode.

The bitstream generator 1706 generates the bitstream including the chroma intra prediction information indicating whether the CCLM mode is to be applied to the current chroma block.

According to an embodiment, the CCLM mode may be classified into a left CCLM mode, an upper CCLM mode, and an upper-left CCLM mode, according to locations of reference chroma samples. The intra predictor 1702 may predict the current chroma block, according to the left CCLM mode. The intra predictor 1702 may predict the current chroma block, according to the upper CCLM mode. Also, the intra predictor 1702 may predict the current chroma block, according to the upper-left CCLM mode.

The intra prediction mode determiner 1704 may determine which CCLM mode from among the left CCLM mode, the upper CCLM mode, and the upper-left CCLM mode is to be applied to the current chroma block, according to a prediction result with respect to the current chroma block according to the left CCLM mode, a prediction result with respect to the current chroma block according to the upper CCLM mode, and a prediction result with respect to the current chroma block according to the upper-left CCLM mode. Then, the bitstream generator 1706 may generate the bitstream including CCLM mode information indicating the locations of the reference chroma samples.

The CCLM mode of the video encoding apparatus 1700 of FIG. 17 may be set to be equal to a prediction method of the CCLM mode of the video decoding apparatus 1600 of FIG. 16. Accordingly, the CCLM mode of FIG. 17 has characteristics of the CCLM mode of FIG. 16.

The intra predictor 1702, the intra prediction mode determiner 1704, and the bitstream generator 1706 of the video encoding apparatus 1700 may include one or more instructions for performing a video encoding method of the video encoding apparatus 1700. The intra predictor 1702, the intra prediction mode determiner 1704, and the bitstream generator 1706 of the video encoding apparatus 1700 may be implemented as a program including the one or more instructions. The video encoding apparatus 1700 may include one or more memory devices storing the program and one or more processors configured to perform the one or more instructions of the program. The program including the one or more instructions may be stored in a computer-recordable storage medium.

Hereinafter, with reference to FIGS. 18 to 29, embodiments of a CCLM mode will now be described in detail. In FIGS. 18 to 29, coordinates of a sample located to the upper-left of a chroma block are set to be a reference point (0,0). An x-component of the coordinates of the sample is increased to the right and is decreased to the left. A y-component of the coordinates of the sample is increased to the bottom and is decreased to the top.

FIG. 18 illustrates a prediction method according to a CCLM mode, according to an embodiment.

There may be a linear correlation between chroma samples of a current chroma block 1800 and luma samples of a reference luma block 1820 corresponding to the current chroma block 1800. Therefore, according to the linear correlation between the current chroma block 1800 and the reference luma block 1820, it is highly probable that the current chroma block 1800 is to be precisely predicted from the reference luma block 1820. The CCLM mode provides a method of predicting the current chroma block 1800 according to the linear correlation described above.

Because the current chroma block 1800 is not decoded, a video decoder cannot accurately derive the linear correlation between the current chroma block 1800 and the reference luma block 1820. A linear correlation between adjacent chroma samples 1810 of the current chroma block 1800 and adjacent luma samples 1830 of the reference luma block 1820 which are already decoded is similar to the linear correlation between the current chroma block 1800 and the reference luma block 1820. Therefore, instead, the linear correlation between the adjacent chroma samples 1810 of the current chroma block 1800 and the adjacent luma samples 1830 of the reference luma block 1820 is applied to the current chroma block 1800.

The linear correlation between the adjacent chroma samples 1810 and the adjacent luma samples 1830 is determined according to a luma-chroma sample pair of a luma sample and a chroma sample that are spatially collocated. For example, one luma-chroma sample pair is determined according to a chroma sample 1812 and four luma samples 1832 corresponding to the chroma sample 1812.

A luma-chroma sample pair may be expressed as (L,C). Where, L described above indicates a sample value of a luma sample, and C described above indicates a sample value of a chroma sample. For example, in the luma-chroma sample pair of the chroma sample 1812 and the four luma samples 1832, L may be determined to be an average sample value of the four luma samples 1832 or one sample value from among the four luma samples 1832, and C may be determined to be a sample value of the chroma sample 1812.

With reference to FIG. 18, according to a color format of 4:2:0, a relation between the current chroma block 1800 and the reference luma block 1820 is described. When the color format is 4:2:0, four luma samples correspond to one chroma sample. Therefore, it is illustrated that the chroma sample 1812 correspond to the four luma samples 1832.

However, when it is a color format of 4:2:2 where two luma samples correspond to one chroma sample, each chroma sample may correspond to two luma samples. Also, when it is a color format of 4:4:4 where one luma sample corresponds to one chroma sample, each chroma sample may correspond to one luma sample.

According to all luma samples and chroma samples included in the adjacent chroma samples 1810 and the adjacent luma samples 1830, a plurality of luma-chroma sample pairs may be determined. Then, a linear correlation between the adjacent chroma samples 1810 and the adjacent luma samples 1830 may be derived from the plurality of luma-chroma sample pairs. From the linear correlation, a linear model for predicting the current chroma block 1800 from the reference luma block 1820 may be derived.

According to an embodiment, one or more luma-chroma sample pairs may be determined according to some luma samples and chroma samples included in the adjacent chroma samples 1810 and the adjacent luma samples 1830. When a linear relation is derived from luma-chroma sample pairs of all luma samples and chroma samples included in the adjacent chroma samples 1810 and the adjacent luma samples 1830, a computation amount for the CCLM mode may be extremely large. In particular, when the current chroma block 1800 is larger than a predetermined size, encoding and decoding rates may be decreased due to an increase in a computation amount according to the CCLM mode. Therefore, by using only some luma samples and chroma samples included in the adjacent chroma samples 1810 and the adjacent luma samples 1830, an increase in a computation amount according to the CCLM mode may be constrained.

FIGS. 19 to 26 illustrate various embodiments of luma samples and chroma samples which are used in a CCLM mode, from among the adjacent chroma samples 1810 and the adjacent luma samples 1830.

FIG. 19 illustrates CCLM mode reference locations referred to by a chroma block 1900 of a 4x4 size.

Some of chroma samples 1910 adjacent to the chroma block 1900 are selected as reference chroma samples according to the CCLM mode reference locations. According to an embodiment, at least two of locations of chroma samples 1912, 1914, 1916, 1918, 1920, 1922, 1924, 1926, and 1928 are determined to be the CCLM mode reference locations.

According to an embodiment, two of locations of upper chroma samples 1912, 1914, 1916, 1918, and 1920 and two of locations of left chroma samples 1922, 1924, 1926, and 1928 may be determined to be the CCLM mode reference locations.

Also, according to an embodiment, one of the locations of the upper chroma samples 1912, 1914, 1916, 1918, and 1920 and one of the locations of the left chroma samples 1922, 1924, 1926, and 1928 may be determined to be the CCLM mode reference locations.

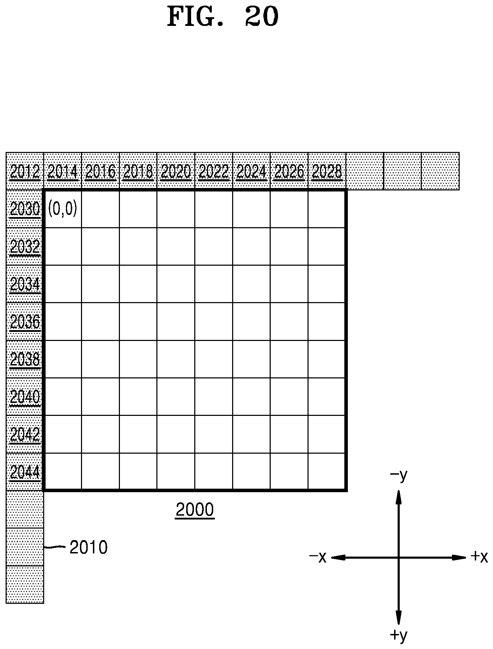

FIG. 20 illustrates CCLM mode reference locations referred to by a chroma block 2000 of an 8x8 size.

Some of chroma samples 2010 adjacent to the chroma block 2000 are selected as reference chroma samples according to the CCLM mode reference locations. According to an embodiment, at least two of locations of chroma samples 2012, 2014, 2016, 2018, 2020, 2022, 2024, 2026, 2028, 2030, 2032, 2034, 2036, 2038, 2040, 2042, and 2044 are determined to be the CCLM mode reference locations.

According to an embodiment, four of locations of upper chroma samples 2012, 2014, 2016, 2018, 2020, 2022, 2024, 2026, and 2028 and four of locations of left chroma samples 2030, 2032, 2034, 2036, 2038, 2040, 2042, and 2044 may be determined to be the CCLM mode reference locations.

According to an embodiment, two of the locations of the upper chroma samples 2012, 2014, 2016, 2018, 2020, 2022, 2024, 2026, and 2028 and two of the locations of the left chroma samples 2030, 2032, 2034, 2036, 2038, 2040, 2042, and 2044 may be determined to be the CCLM mode reference locations.

According to an embodiment, one of the locations of the upper chroma samples 2012, 2014, 2016, 2018, 2020, 2022, 2024, 2026, and 2028 and one of the locations of the left chroma samples 2030, 2032, 2034, 2036, 2038, 2040, 2042, and 2044 may be determined to be the CCLM mode reference locations.

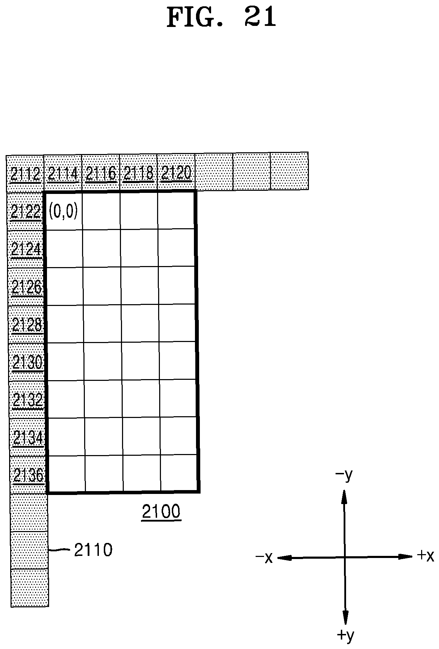

FIG. 21 illustrates CCLM mode reference locations referred to by a chroma block 2100 of a 4x8 size.

Some of chroma samples 2110 adjacent to the chroma block 2100 are selected as reference chroma samples according to the CCLM mode reference locations. According to an embodiment, at least two of locations of chroma samples 2112, 2114, 2116, 2118, 2120, 2122, 2124, 2126, 2128, 2130, 2132, 2134, and 2136 are determined to be the CCLM mode reference locations.

According to an embodiment, two of locations of upper chroma samples 2112, 2114, 2116, 2118, and 2120 and four of locations of left chroma samples 2122, 2124, 2126, 2128, 2130, 2132, 2134, and 2136 may be determined to be the CCLM mode reference locations.

According to an embodiment, two of the locations of the upper chroma samples 2112, 2114, 2116, 2118, and 2120 and two of the locations of the left chroma samples 2122, 2124, 2126, 2128, 2130, 2132, 2134, and 2136 may be determined to be the CCLM mode reference locations.

According to an embodiment, one of the locations of the upper chroma samples 2112, 2114, 2116, 2118, and 2120 and one of the locations of the left chroma samples 2122, 2124, 2126, 2128, 2130, 2132, 2134, and 2136 may be determined to be the CCLM mode reference locations.

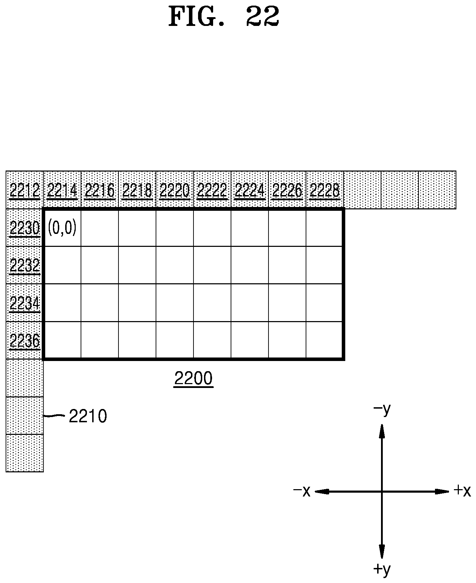

FIG. 22 illustrates CCLM mode reference locations referred to by a chroma block 2200 of an 8x4 size.

Some of chroma samples 2210 adjacent to the chroma block 2200 are selected as reference chroma samples according to the CCLM mode reference locations. According to an embodiment, at least two of locations of chroma samples 2212, 2214, 2216, 2218, 2222, 2222, 2224, 2226, 2228, 2230, 2232, 2234, and 2236 are determined to be the CCLM mode reference locations.

According to an embodiment, four of locations of upper chroma samples 2212, 2214, 2216, 2218, 2220, 2222, 2224, 2226, and 2228 and two of locations of left chroma samples 2230, 2232, 2234, and 2236 may be determined to be the CCLM mode reference locations.

According to an embodiment, two of the locations of the upper chroma samples 2212, 2214, 2216, 2218, 2220, 2222, 2224, 2226, and 2228 and two of the locations of the left chroma samples 2230, 2232, 2234, and 2236 may be determined to be the CCLM mode reference locations.

According to an embodiment, one of the locations of the upper chroma samples 2212, 2214, 2216, 2218, 2220, 2222, 2224, 2226, and 2228 and one of the locations of the left chroma samples 2230, 2232, 2234, and 2236 may be determined to be the CCLM mode reference locations.

According to FIGS. 18 to 21, one CCLM mode reference location may be set for each of upper chroma samples and left chroma samples. Alternatively, two CCLM mode reference locations may be set for each of upper chroma samples and left chroma samples. Alternatively, the number of CCLM mode reference locations which is proportional to a size of a chroma block may be set for upper chroma samples and left chroma samples.

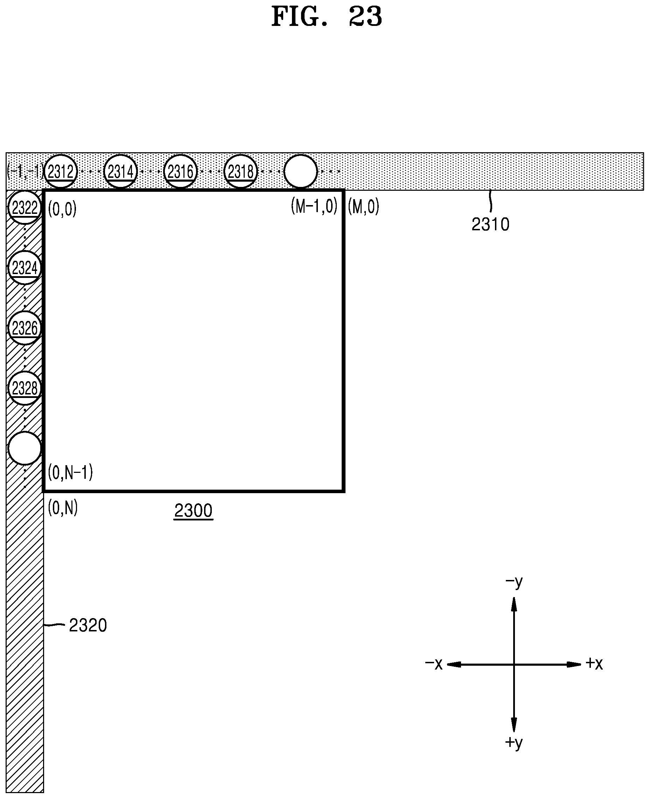

FIG. 23 illustrates an embodiment of CCLM mode reference locations referred to by a chroma block 2300 of an MxN size, in an upper-left CCLM mode. Where M and N are positive integers, respectively.

Some of upper chroma samples 2310 and some of left chroma samples 2320 which are adjacent to the chroma block 2300 are selected as reference chroma samples according to CCLM mode reference locations. Intervals between the CCLM mode reference locations are set to be regular between the CCLM mode reference locations. For example, CCLM mode reference locations 2312, 2314, 2316, and 2318 may be set, such that an interval of k sample unit may be available between the CCLM mode reference locations 2312, 2314, 2316, and 2318 with respect to the upper chroma samples 2310. Also, CCLM mode reference locations 2322, 2324, 2326, and 2328 may be set, such that an interval of k sample unit may be available between the CCLM mode reference locations 2322, 2324, 2326, and 2328 with respect to the left chroma samples 2320. Where, k described above is an integer equal to or greater than 2.

In FIG. 23, CCLM mode reference locations with respect to the upper chroma samples 2310 may be determined in proportion to a size of a block. For example, when an M value is 32 and k is 4, 8 CCLM mode reference locations may be determined with respect to the upper chroma samples 2310. Therefore, the number of the CCLM mode reference locations with respect to the upper chroma samples 2310 may be determined in proportion to a width (M) of the block.

Equally, like the upper chroma samples 2310, CCLM mode reference locations with respect to the left chroma samples 2320 may be determined in proportion to a size of a block. Therefore, the number of the CCLM mode reference locations with respect to the left chroma samples 2320 may be determined in proportion to a height (N) of the block.

According to an embodiment, only the number of CCLM mode reference locations may be adaptively determined according to a size of a block, and intervals between the CCLM mode reference locations may be set to be irregular.

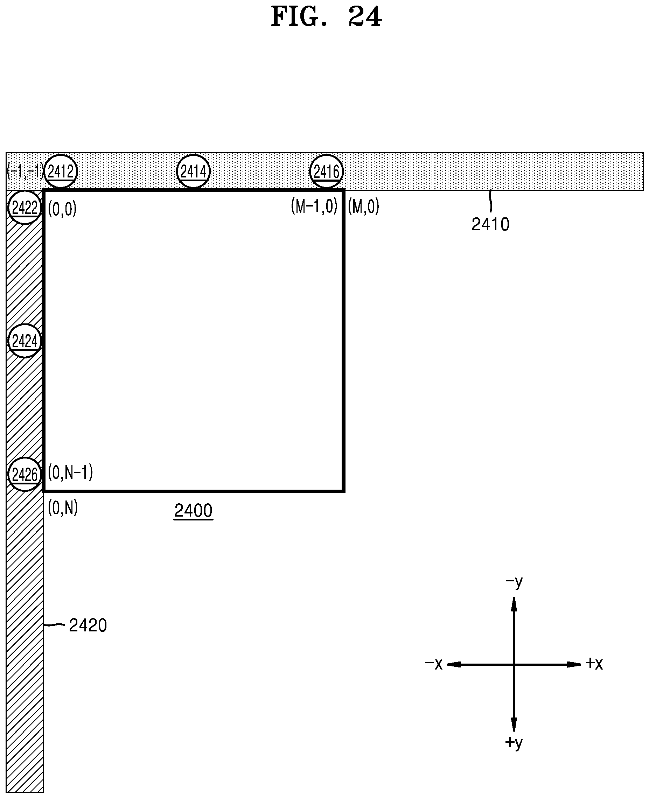

FIG. 24 illustrates an embodiment of CCLM mode reference locations referred to by a chroma block 2400 of an MxN size, in an upper-left CCLM mode. Where, M and N described above are positive integers, respectively.

According to FIG. 24, three CCLM mode reference locations 2412, 2414, and 2416 are determined from upper chroma samples 2410, and three CCLM mode reference locations 2422, 2424, and 2426 are determined from left chroma samples 2420. Unlike to the embodiment of FIG. 23, the number of CCLM mode reference locations is determined, regardless of the size (MxN) of the chroma block 2400. Therefore, when the size of the chroma block 2400 is large, an increase in a computation amount required for prediction according to a CCLM mode may be constrained.

According to an embodiment, the first upper CCLM mode reference location 2412 is adjacent to an upper-left vertex of the chroma block 2400. For example, coordinates of the first upper CCLM mode reference location 2412 may be set to be (0, -1). The second upper CCLM mode reference location 2414 is adjacent to an upper center point of the chroma block 2400. For example, coordinates of the second upper CCLM mode reference location 2414 may be set to be (M/2, -1). The third upper CCLM mode reference location 2416 is adjacent to an upper-right vertex of the chroma block 2400. For example, coordinates of the third upper CCLM mode reference location 2416 may be set to be (M-1, -1).

According to an embodiment, the first left CCLM mode reference location 2422 is adjacent to the upper-left vertex of the chroma block 2400. For example, coordinates of the first left CCLM mode reference location 2422 may be set to be (-1, 0). The second left CCLM mode reference location 2424 is adjacent to a left-end center point of the chroma block 2400. For example, coordinates of the second left CCLM mode reference location 2424 may be set to be (-1, N/2). The third left CCLM mode reference location 2426 is adjacent to a lower-left vertex of the chroma block 2400. For example, coordinates of the third left CCLM mode reference location 2426 may be set to be (-1, N-1).

One of ordinary skill in the art may change six CCLM mode reference locations introduced in FIG. 24. Therefore, for optimization of the CCLM mode, the six CCLM mode reference locations may be changed by a predetermined sample unit.

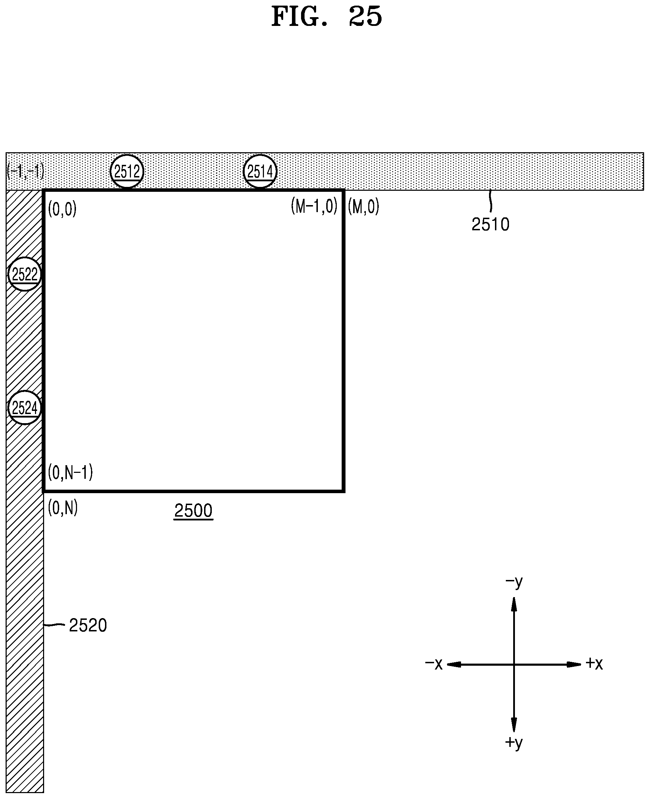

FIG. 25 illustrates an embodiment of CCLM mode reference locations referred to by a chroma block 2500 of an MxN size, in an upper-left CCLM mode. Where, M and N described above are positive integers, respectively.

According to FIG. 25, two CCLM mode reference locations 2512 and 2514 are determined from upper chroma samples 2510, and two CCLM mode reference locations 2522 and 2524 are determined from left chroma samples 2520. As in the embodiment of FIG. 24, the number of CCLM mode reference locations is determined, regardless of the size (MxN) of the chroma block 2500. Therefore, when the size of the chroma block 2500 is large, an increase in a computation amount required for prediction according to a CCLM mode may be constrained.

According to an embodiment, the fourth upper CCLM mode reference location 2512 is located in the middle between an upper-left vertex of the chroma block 2500 and an upper center point of the chroma block 2500. For example, coordinates of the fourth upper CCLM mode reference location 2512 may be set to be (M/4, -1). The fifth upper CCLM mode reference location 2514 is located in the middle between an upper-right vertex of the chroma block 2500 and the upper center point of the chroma block 2500. For example, coordinates of the fifth upper CCLM mode reference location 2514 may be set to be (3M/4, -1).

According to an embodiment, the fourth left CCLM mode reference location 2522 is located in the middle between an upper-left vertex of the chroma block 2500 and a left-end center point of the chroma block 2500. For example, coordinates of the fourth left CCLM mode reference location 2522 may be set to be (-1, N/4). The fifth left CCLM mode reference location 2524 is located in the middle between a lower-left vertex of the chroma block 2500 and the left-end center point of the chroma block 2500. For example, coordinates of the fifth left CCLM mode reference location 2524 may be set to be (-1, 3N/4).

One of ordinary skill in the art may change four CCLM mode reference locations introduced in FIG. 25. Therefore, for optimization of the CCLM mode, the four CCLM mode reference locations may be changed by a predetermined sample unit.

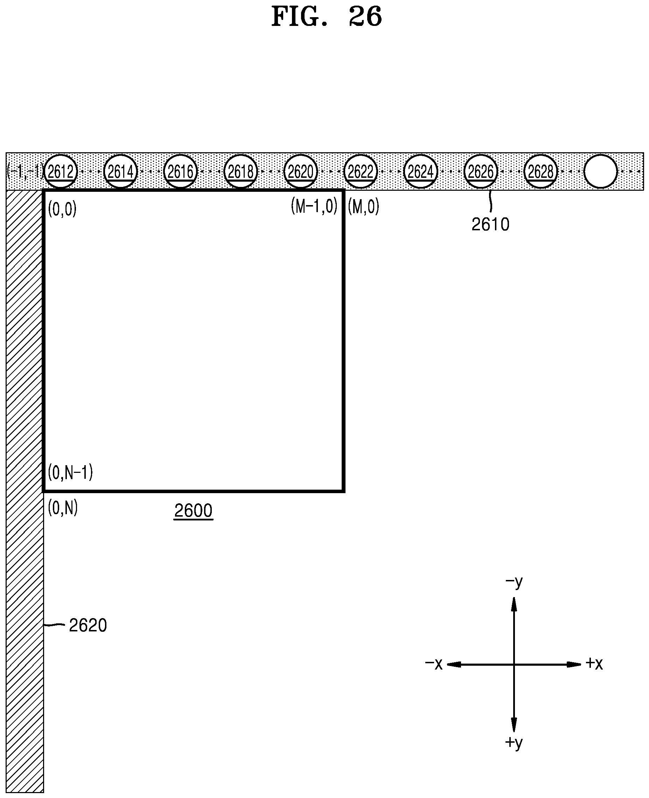

FIG. 26 illustrates an embodiment of CCLM mode reference locations referred to by a chroma block 2600 of an MxN size, in an upper CCLM mode. Where, M and N described above are positive integers, respectively.

Some of upper chroma samples 2610 adjacent to the chroma block 2600 are selected as reference chroma samples according to CCLM mode reference locations. Intervals between the CCLM mode reference locations are set to be regular between the CCLM mode reference locations. For example, CCLM mode reference locations 2612, 2614, 2616, 2618, 2620, 2622, 2624, 2626, and 2628 may be set, such that an interval of k sample unit may be available between the CCLM mode reference locations 2612, 2614, 2616, 2618, 2620, 2622, 2624, 2626, and 2628 with respect to the upper chroma samples 2610. Where, k described above is an integer equal to or greater than 2. Left chroma samples 2620 are not used in the upper CCLM mode.

In FIG. 26, CCLM mode reference locations may be determined in proportion to a width of a block. For example, when an M value is 32 and k is 4, 16 CCLM mode reference locations may be determined with respect to the upper chroma samples 2610. Therefore, the number of the CCLM mode reference locations with respect to the upper chroma samples 2610 may be determined in proportion to a multiple of 2 of a width (M) of the block.

Chroma samples located to the upper-right of the chroma block 2600 are far distant from the chroma block 2600, and thus have a relatively small similarity to the chroma block 2600. Therefore, according to an embodiment, the CCLM mode reference locations may be set, such that chroma samples located to the upper of the chroma block 2600 are more than the chroma samples located to the upper-right.

According to an embodiment, only the number of CCLM mode reference locations may be adaptively determined according to a size of a block, and intervals between the CCLM mode reference locations may be set to be irregular.

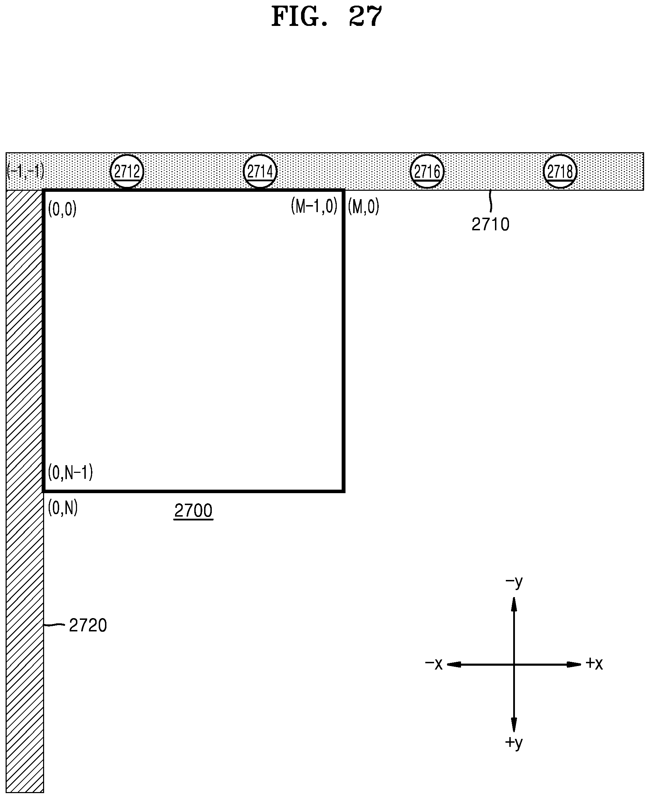

FIG. 27 illustrates an embodiment of CCLM mode reference locations referred to by a chroma block 2700 of an MxN size, in an upper CCLM mode. Where, M and N described above are positive integers, respectively.

Referring to FIG. 27, four CCLM mode reference locations 2712, 2714, 2716, and 2718 are determined from upper chroma samples 2710. Unlike to the embodiment of FIG. 26, the number of CCLM mode reference locations is determined, regardless of the size (MxN) of the chroma block 2700. Therefore, when the size of the chroma block 2700 is large, an increase in a computation amount required for prediction according to a CCLM mode may be constrained.

According to an embodiment, the fourth upper CCLM mode reference location 2712 may be located in the middle between an upper-left vertex of the chroma block 2700 and an upper center point of the chroma block 2700. For example, coordinates of the fourth upper CCLM mode reference location 2712 may be set to be (M/4, -1). The fifth upper CCLM mode reference location 2714 may be located in the middle between an upper-right vertex of the chroma block 2700 and the upper center point of the chroma block 2700. For example, coordinates of the fifth upper CCLM mode reference location 2714 may be set to be (3M/4, -1).

The sixth upper CCLM mode reference location 2716 may be located at a point distant in a right direction from the upper-right vertex of the chroma block 2700 by 1/4 of a width (M) of the chroma block 2700. For example, coordinates of the sixth upper CCLM mode reference location 2716 may be set to be (5M/4, -1). The seventh upper CCLM mode reference location 2718 may be located at a point distant in a right direction from the upper-right vertex of the chroma block 2700 by 3/4 of the width (M) of the chroma block 2700. For example, coordinates of the seventh upper CCLM mode reference location 2718 may be set to be (7M/4, -1).

According to another embodiment, the fourth upper CCLM mode reference location 2712 may be distant in a left direction from an upper-left vertex of the chroma block 2700 by a value corresponding to 1/8 of a sum of a width and a height of the chroma block 2700. For example, coordinates of the fourth upper CCLM mode reference location 2712 may be set to be ((M+N)/8, -1). The fifth upper CCLM mode reference location 2714 may be distant in a left direction from the upper-left vertex of the chroma block 2700 by a value corresponding to 3/8 of the sum of the width and the height of the chroma block 2700. For example, coordinates of the fifth upper CCLM mode reference location 2714 may be set to be (3(M+N)/8, -1).

The sixth upper CCLM mode reference location 2716 may be distant in a left direction from the upper-left vertex of the chroma block 2700 by a value corresponding to 5/8 of the sum of the width and the height of the chroma block 2700. For example, coordinates of the sixth upper CCLM mode reference location 2716 may be set to be (5(M+N)/8, -1). The seventh upper CCLM mode reference location 2718 may be distant in a left direction from the upper-left vertex of the chroma block 2700 by a value corresponding to 7/8 of the sum of the width and the height of the chroma block 2700. For example, coordinates of the seventh upper CCLM mode reference location 2718 may be set to be (7(M+N)/8, -1).

One of ordinary skill in the art may change four CCLM mode reference locations introduced in FIG. 27. Therefore, for optimization of the CCLM mode, the four CCLM mode reference locations may be changed by a predetermined sample unit.

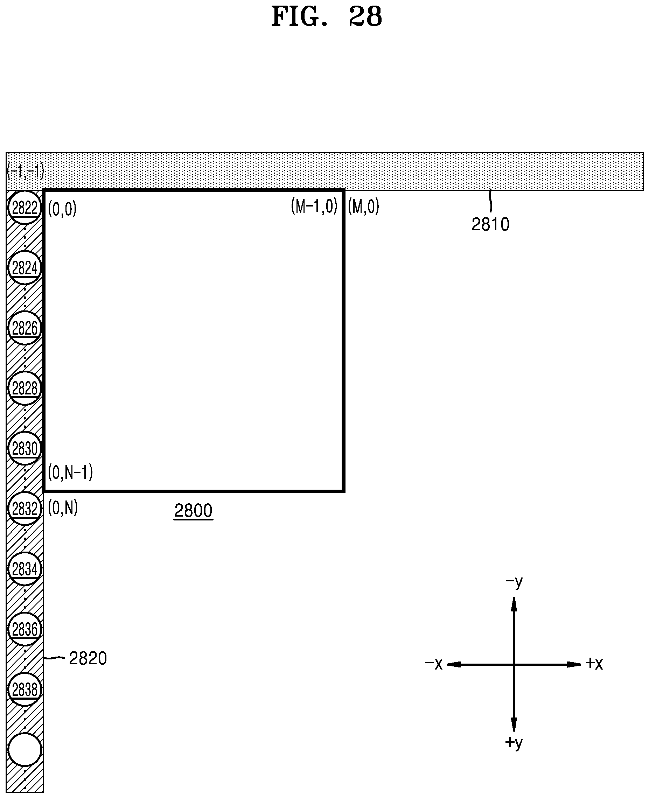

FIG. 28 illustrates an embodiment of CCLM mode reference locations referred to by a chroma block 2800 of an MxN size, in a left CCLM mode. Where, M and N described above are positive integers, respectively.

Some of left chroma samples 2820 adjacent to the chroma block 2800 are selected as reference chroma samples according to CCLM mode reference locations. Intervals between the CCLM mode reference locations are set to be regular between the CCLM mode reference locations. For example, CCLM mode reference locations 2822, 2824, 2826, 2828, 2830, 2832, 2834, 2836, and 2838 may be set, such that an interval of k sample unit may be available between the CCLM mode reference locations 2822, 2824, 2826, 2828, 2830, 2832, 2834, 2836, and 2838 with respect to the left chroma samples 2820. Where, k described above is an integer equal to or greater than 2. Upper chroma samples 2810 are not used in the left CCLM mode.

In FIG. 28, CCLM mode reference locations may be determined in proportion to a height of a block. For example, when an N value is 32 and k is 4, 16 CCLM mode reference locations may be determined with respect to the left chroma samples 2820. Therefore, the number of the CCLM mode reference locations with respect to the left chroma samples 2820 may be determined in proportion to a multiple of 2 of a height (N) of the block.

Chroma samples located to the lower-left of the chroma block 2800 are far distant from the chroma block 2800, and thus have a relatively small similarity to the chroma block 2800. Therefore, according to an embodiment, the CCLM mode reference locations may be set, such that chroma samples located to the left of the chroma block 2800 are more than the chroma samples located to the lower-left.

According to an embodiment, only the number of CCLM mode reference locations may be adaptively determined according to a size of a block, and intervals between the CCLM mode reference locations may be set to be irregular.

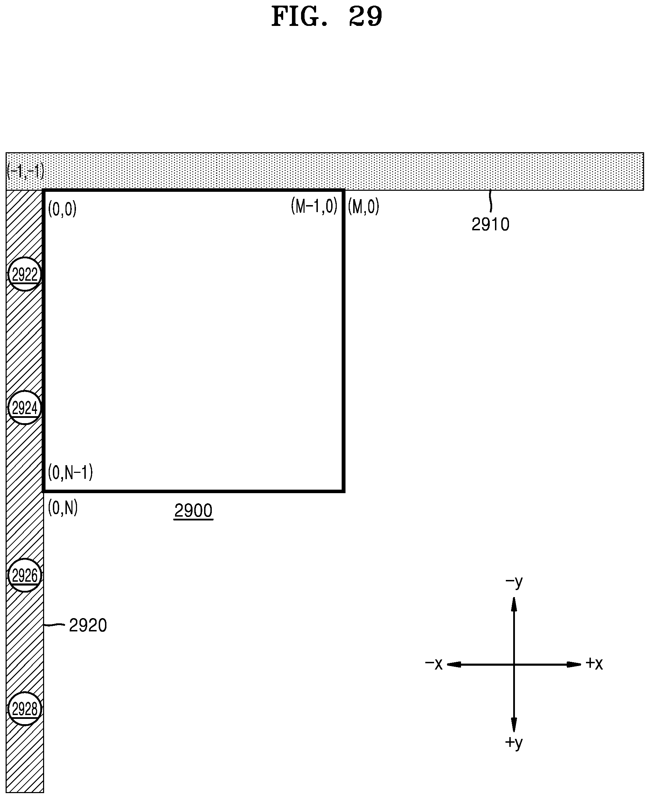

FIG. 29 illustrates an embodiment of CCLM mode reference locations referred to by a chroma block 2900 of an MxN size, in a left CCLM mode. Where, M and N described above are positive integers, respectively.

Referring to FIG. 29, four CCLM mode reference locations 2922, 2924, 2926, and 2928 are determined from left chroma samples 2920. Unlike to the embodiment of FIG. 28, the number of CCLM mode reference locations is determined, regardless of the size (MxN) of the chroma block 2900. Therefore, when the size of the chroma block 2900 is large, an increase in a computation amount required for prediction according to a CCLM mode may be constrained.

According to an embodiment, the fourth left CCLM mode reference location 2922 may be located in the middle between an upper-left vertex of the chroma block 2900 and a left-end center point of the chroma block 2900. For example, coordinates of the fourth left CCLM mode reference location 2922 may be set to be (-1, N/4). The fifth left CCLM mode reference location 2924 may be located in the middle between a lower-left vertex of the chroma block 2900 and the left-end center point of the chroma block 2900. For example, coordinates of the fifth left CCLM mode reference location 2924 may be set to be (-1, 3N/4).

The sixth left CCLM mode reference location 2926 may be located at a point distant in a lower direction from the lower-left vertex of the chroma block 2900 by 1/4 of a height (N) of the chroma block 2900. For example, coordinates of the sixth left CCLM mode reference location 2926 may be set to be (-1, 5N/4). The seventh left CCLM mode reference location 2928 may be located at a point distant in a lower direction from the lower-left vertex of the chroma block 2900 by 3/4 of the height (N) of the chroma block 2900. For example, coordinates of the seventh left CCLM mode reference location 2928 may be set to be (-1, 7N/4).

According to another embodiment, the fourth left CCLM mode reference location 2922 may be distant in a lower direction from the upper-left vertex of the chroma block 2900 by a value corresponding to 1/8 of a sum of a width and a height of the chroma block 2900. For example, coordinates of the fourth left CCLM mode reference location 2922 may be set to be (-1, (M+N)/8). The fifth left CCLM mode reference location 2924 may be distant in a lower direction from the upper-left vertex of the chroma block 2900 by a value corresponding to 3/8 of the sum of the width and the height of the chroma block 2900. For example, coordinates of the fifth left CCLM mode reference location 2924 may be set to be (-1, 3(M+N)/8).

The sixth left CCLM mode reference location 2926 may be distant in a lower direction from the upper-left vertex of the chroma block 2900 by a value corresponding to 5/8 of the sum of the width and the height of the chroma block 2900. For example, coordinates of the sixth left CCLM mode reference location 2926 may be set to be (-1, 5(M+N)/8). The seventh left CCLM mode reference location 2928 may be distant in a lower direction from the upper-left vertex of the chroma block 2900 by a value corresponding to 7/8 of the sum of the width and the height of the chroma block 2900. For example, coordinates of the seventh left CCLM mode reference location 2928 may be set to be (-1, 7(M+N)/8).

One of ordinary skill in the art may change four CCLM mode reference locations introduced in FIG. 29. Therefore, for optimization of the CCLM mode, the four CCLM mode reference locations may be changed by a predetermined sample unit.

FIG. 30 describes embodiments of determining a reference luma sample corresponding to a reference chroma sample 3020 from a plurality of luma samples 3030, 3032, 3034, 3036, 3038, 3040, 3042, 3044, and 3046 of an area 3010 corresponding to the reference chroma sample 3020. Each square of an image 3000 represents a luma sample, and each circle represents a chroma sample.

In FIG. 30, luma samples and chroma samples of the image 3000 are arrayed according to a color format of 4:2:0. According to the color format of 4:2:0, one chroma sample corresponds to four luma samples. The area 3010 includes one reference chroma sample 3020 and 9 luma samples 3030, 3032, 3034, 3036, 3038, 3040, 3042, 3044, and 3046 adjacent to a location of the reference chroma sample 3020. To determine a luma-chroma sample pair of the reference chroma sample 3020, one luma sample corresponding to the reference chroma sample 3020 has to be obtained from the 9 luma samples 3030, 3032, 3034, 3036, 3038, 3040, 3042, 3044, and 3046.

According to an embodiment, a reference luma sample may be determined according to an average sample value of the 9 luma samples 3030, 3032, 3034, 3036, 3038, 3040, 3042, 3044, and 3046. Alternatively, a reference luma sample may be determined according to a weighted average sample value of the 9 luma samples 3030, 3032, 3034, 3036, 3038, 3040, 3042, 3044, and 3046. Also, in addition to the 9 luma samples 3030, 3032, 3034, 3036, 3038, 3040, 3042, 3044, and 3046, a plurality of luma samples adjacent to the area 3010 may be additionally referred to in determination of a reference luma sample.

According to an embodiment, a reference luma sample may be determined according to a weighted average value of three luma samples 3036, 3038, and 3040 of the area 3010. Weights to be applied to the three luma samples 3036, 3038, and 3040 may be set as [1, 2, 1].

According to an embodiment, a reference luma sample may be determined according to a weighted average value of three luma samples 3032, 3038, and 3044 of the area 3010. Weights to be applied to the three luma samples 3032, 3038, and 3044 may be set as [1, 2, 1].

According to an embodiment, a reference luma sample may be determined according to a weighted average value of five luma samples 3032, 3036, 3038, 3040, and 3044 of the area 3010. Weights to be applied to the five luma samples 3032, 3036, 3038, 3040, and 3044 may be set as [1, 1, 4, 1, 1].

According to an embodiment, a reference luma sample may be determined according to a weighted average value of six luma samples 3036, 3038, 3040, 3042, 3044, and 3046 of the area 3010. Weights to be applied to the six luma samples 3036, 3038, 3040, 3042, 3044, and 3046 may be set as [1, 2, 1, 1, 2, 1].

According to an embodiment, a reference luma sample may be determined, according to one of nine luma samples 3030, 3032, 3034, 3036, 3038, 3040, 3042, 3044, and 3046. Because a difference between sample values may be small among the nine luma samples 3030, 3032, 3034, 3036, 3038, 3040, 3042, 3044, and 3046, a computation amount required to determine a reference luma sample may be decreased by simply using only one luma sample from among the nine luma samples 3030, 3032, 3034, 3036, 3038, 3040, 3042, 3044, and 3046. For example, a reference luma sample may be determined by using only a luma sample at a particular location of the area 3010. Therefore, only the luma sample 3030 located at the upper-left may be used in determining the reference luma sample.

Unlike to that of FIG. 30, when a color format of 4:2:2 is applied to the image 3000, one chroma sample corresponds to two luma samples. Therefore, a reference luma sample corresponding to a reference chroma sample is determined from two luma samples corresponding to the reference chroma sample. Accordingly, the reference luma sample may be determined from an average sample value of the two luma samples or from one sample value of the two luma samples.

Unlike to that of FIG. 30, when a color format of 4:4:4 is applied to the image 3000, one chroma sample corresponds to one luma sample. Therefore, a reference luma sample may be determined to be a luma sample corresponding to the reference chroma sample.

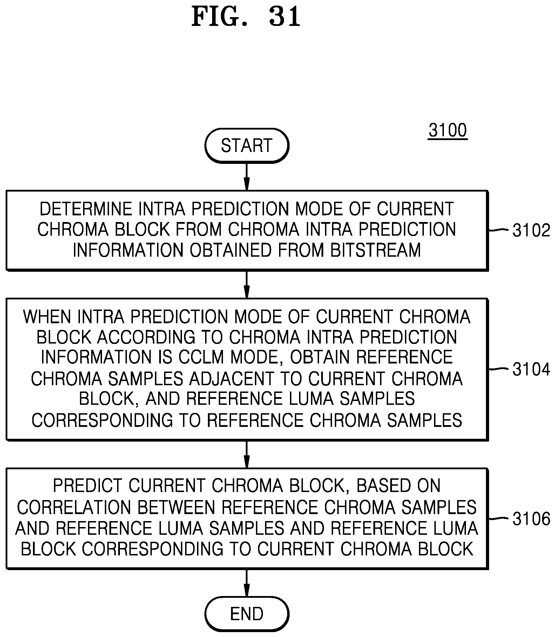

FIG. 31 is a flowchart of a video decoding method 3100 according to a CCLM mode.

In operation 3102, an intra prediction mode of a current chroma block is determined from chroma intra prediction information obtained from a bitstream.

In operation 3104, when the intra prediction mode of the current chroma block according to the chroma intra prediction information is a CCLM mode, reference chroma samples adjacent to the current chroma block, and reference luma samples corresponding to the reference chroma samples are obtained.

In operation 3106, the current chroma block is predicted based on a correlation between the reference chroma samples and the reference luma samples and a reference luma block corresponding to the current chroma block.

The functions of the video decoding apparatus 1600 according to the CCLM mode described with reference to FIG. 16 may be applied to the video decoding method 3100 according to the CCLM mode. Each operation of the video decoding method 3100 may be performed by the intra prediction mode determiner 1602 and the intra predictor 1604 of the video decoding apparatus 1600. Also, each operation of the video decoding method 3100 may be performed by one or more processors that substantially perform functions of the intra prediction mode determiner 1602 and the intra predictor 1604.

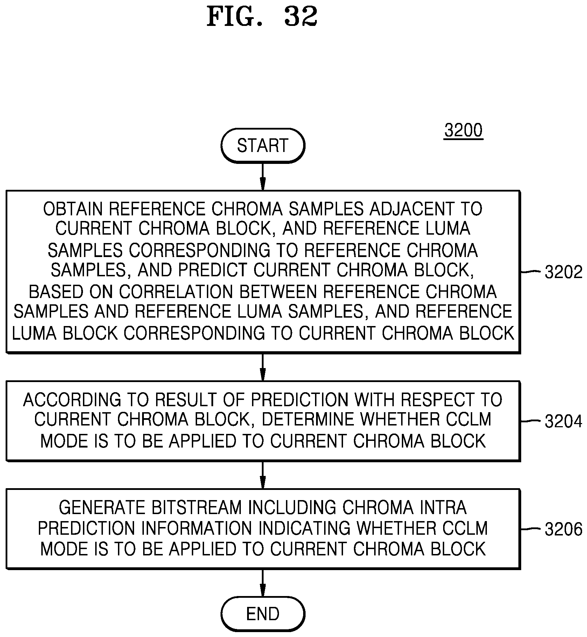

FIG. 32 is a flowchart of a video encoding method 3200 according to a CCLM mode.

In operation 3202, reference chroma samples adjacent to a current chroma block, and reference luma samples corresponding to the reference chroma samples are obtained. Then, the current chroma block is predicted, based on a correlation between the reference chroma samples and the reference luma samples, and a reference luma block corresponding to the current chroma block.

In operation 3204, according to a result of the prediction with respect to the current chroma block, whether a CCLM mode is to be applied to the current chroma block is determined.

In operation 3206, a bitstream including chroma intra prediction information indicating whether the CCLM mode is to be applied to the current chroma block is generated.

The functions of the video encoding apparatus 1700 according to the CCLM mode described with reference to FIG. 17 may be applied to the video encoding method 3200 according to the CCLM mode. Each operation of the video encoding method 3200 may be performed by the intra predictor 1702, the intra prediction mode determiner 1704, and the bitstream generator 1706 of the video encoding apparatus 1700. Also, each operation of the video encoding method 3200 may be performed by one or more processors that substantially perform functions of the intra predictor 1702, the intra prediction mode determiner 1704, and the bitstream generator 1706.

According to a video encoding scheme described with reference to FIGS. 1A to 32, image data in a spatial domain is encoded for each of the coding units having the tree structure, and according to a video decoding scheme based on the coding units having the tree structure, decoding is performed on each of largest coding units and the image data in the spatial domain is reconstructed, and thus a video such as a picture and a picture sequence may be reconstructed. The reconstructed video may be reproduced by a reproducing device, may be stored in a storage medium, or may be transmitted over a network.

Meanwhile, the embodiments of the disclosure may be implemented as a computer-executable program, and may be implemented in a general-purpose digital computer that operates the program using a computer-readable recording medium.

While optimal embodiments of the disclosure are described, it will be understood by one of ordinary skill in the art that various substitutes, modifications, and amendments may be made to the one or more embodiments. That is, the substitutes, modifications, and amendments do not depart from the scope of the disclosure and are construed as being included in the disclosure. Therefore, the embodiments should be considered in a descriptive sense only and not for purposes of limitation.

**Claims**

1. A video decoding method comprising:

   determining an intra prediction mode of a current chroma block, from chroma intra prediction information obtained from a bitstream;
   when the intra prediction mode of the current chroma block according to the chroma intra prediction information is a cross component linear model (CCLM) mode, obtaining reference chroma samples adjacent to the current chroma block, and reference luma samples corresponding to the reference chroma samples; and
   predicting the current chroma block, based on a correlation between the reference chroma samples and the reference luma samples and a reference luma block corresponding to the current chroma block,
   wherein the number of predetermined CCLM mode reference locations from which the reference chroma samples can be obtained is constant, regardless of a size of the current chroma block.

2. The video decoding method of claim 1, wherein the correlation between the reference chroma samples and the reference luma samples is determined by determining luma-chroma sample pairs according to locations of the reference chroma samples and locations of the reference luma samples, and determining a linear model of a luma sample and a chroma sample according to the luma-chroma sample pairs.

3. The video decoding method of claim 2, wherein the linear model of the luma sample and the chroma sample is determined according to linear regression analysis based on the luma-chroma sample pairs.

4. The video decoding method of claim 2, wherein the linear model of the luma sample and the chroma sample is determined according to a luma-chroma sample pair having a maximum luma sample value and a luma-chroma sample pair having a minimum luma sample value, from among the luma-chroma sample pairs.

5. The video decoding method of claim 2, wherein the linear model of the luma sample and the chroma sample is determined according to a first representative luma sample value, a first representative chroma sample value, a second representative luma sample value, and a second representative chroma sample value,

   the first representative luma sample value and the first representative chroma sample value are determined from a first luma-chroma sample pair group, and the second representative luma sample value and the second representative chroma sample value are determined from a second luma-chroma sample pair group, and the first luma-chroma sample pair group comprises luma-chroma sample pairs having a large luma sample value, from among the luma-chroma sample pairs, and the second luma-chroma sample pair group comprises luma-chroma sample pairs having a small luma sample value, from among the luma-chroma sample pairs.

6. The video decoding method of claim 1, wherein the reference luma block is decoded before the current chroma block, and
   a location of the reference luma block corresponds to a location of the current chroma block.

7. The video decoding method of claim 1, wherein the reference luma samples are obtained by subsampling luma samples according to a color format, the luma samples corresponding to locations of the reference chroma samples.

8. The video decoding method of claim 1, wherein one of one or more of luma samples corresponding to locations of the reference chroma samples is determined to be the reference luma samples.

9. The video decoding method of claim 1, wherein the predetermined CCLM mode reference locations comprise locations of a first upper reference chroma sample located farthest right, a second upper reference chroma sample located in the middle, and a third upper reference chroma sample located farthest left from among chroma samples immediately adjacent to an upper side of the current chroma block, and
   locations of a first left reference chroma sample located at the top, a second left reference chroma sample located in the middle, and a third left reference chroma sample located at the bottom from among chroma samples immediately adjacent to a left side of the current chroma block.

10. The video decoding method of claim 1, wherein the predetermined CCLM mode reference locations comprise locations of a fourth upper reference chroma sample located between a chroma sample located farthest left and a chroma sample in the middle and a fifth upper reference chroma sample located between a chroma sample located farthest right and the chroma sample in the middle from among chroma samples immediately adjacent to an upper side of the current chroma block, and

locations of a fourth left reference chroma sample located between a chroma sample at the top and a chroma sample in the middle and a fifth left reference chroma sample located between a chroma sample at the bottom and the chroma sample in the middle from among chroma samples immediately adjacent to a left side of the current chroma block.

11. The video decoding method of claim 1, wherein the obtaining of the reference chroma samples adjacent to the current chroma block, and the reference luma samples corresponding to the reference chroma samples comprises:

when the intra prediction mode of the current chroma block according to the chroma intra prediction information is the CCLM mode, obtaining, from the bitstream, CCLM mode information indicating the CCLM mode reference locations; obtaining the reference chroma samples, based on the CCLM mode reference locations according to the CCLM mode information; and obtaining the reference luma samples corresponding to the reference chroma samples.

12. The video decoding method of claim 11, wherein the CCLM mode information indicates one of

a left CCLM mode indicating that the CCLM mode reference locations are present in left and lower-left sides of the current chroma block, an upper CCLM mode indicating that the CCLM mode reference locations are present in upper and upper-right sides of the current chroma block, and an upper-left CCLM mode indicating that the CCLM mode reference locations are present in left and upper sides of the current chroma block.

13. A video decoding apparatus comprising:

a memory storing one or more instructions for implementing the video decoding method of claim 1; and a processor configured to execute the one or more instructions.

14. A computer-readable recording medium having recorded thereon a program comprising one or more instructions for implementing the video decoding method of claim 1.

15. A video encoding method comprising:

obtaining reference chroma samples adjacent to a current chroma block, and reference luma samples corresponding to the reference chroma samples, and predicting the current chroma block, based on a correlation between the reference chroma samples and the reference luma samples, and a reference luma block corresponding to the current chroma block; according to a result of the predicting of the current chroma block, determining whether a cross component linear model (CCLM) mode is to be applied to the current chroma block; and generating a bitstream comprising chroma intra prediction information indicating whether the CCLM mode is to be applied to the current chroma block, wherein the number of predetermined CCLM mode reference locations from which the reference chroma samples can be obtained is constant, regardless of a size of the current chroma block.

16. A video encoding apparatus comprising:

a memory storing one or more instructions for implementing the video encoding method of claim 15; and a processor configured to execute the one or more instructions.

17. A computer-readable recording medium having recorded thereon a program comprising one or more instructions for implementing the video encoding method of claim 15.

# FIG. 1A

100

| 110 | 120 | 130 |
|---|---|---|
| LARGEST CODING UNIT DETERMINER | CODING UNIT DETERMINER | OUTPUT UNIT |

# FIG. 1B

150

| 160 | 170 | 180 |
|---|---|---|
| RECEIVER | CODING INFORMATION EXTRACTOR | DECODER |

# FIG. 2

# FIG. 3

# FIG. 4

EP 3 902 251 A1

# FIG. 5

# FIG. 6

# FIG. 7

700

710a 710b

710c

730

720a
720b

720c
720d
720e

# FIG. 8

800

810a 810b 810c 820a 820b

820c

830

850

FIG. 9

# FIG. 10

# FIG. 11

# FIG. 12

| BLOCK SHAPE DEPTH | 0: SQUARE | 1: NS_VER | 2: NS_HOR |
|---|---|---|---|
| DEPTH D | 1200 | 1210 | 1220 |
| DEPTH D+1 | 1202 | 1212 | 1222 |
| DEPTH D+2 | 1204 | 1214 | 1224 |
| ... | ... | ... | ... |

# FIG. 13

# FIG. 14

# FIG. 15

# FIG. 16

1600

1602

INTRA PREDICTION
MODE DETERMINER

1604

INTRA PREDICTOR

# FIG. 17

1700

1702

INTRA PREDICTOR

1704

INTRA PREDICTION
MODE DETERMINER

1706

BITSTREAM
GENERATOR

FIG. 18

1832

1812

1800

1810

1832

1820

1830

EP 3 902 251 A1

# FIG. 19

|      |       |       |       |       |
|------|-------|-------|-------|-------|
| 1912 | 1914  | 1916  | 1918  | 1920  |
| 1922 | (0,0) |       |       |       |
| 1924 |       |       |       |       |
| 1926 |       |       |       |       |
| 1928 |       |       |       |       |

1900

— 1910

−y

−x ←——→ +x

+y

# FIG. 20

2012 2014 2016 2018 2020 2022 2024 2026 2028

2030 (0,0)

2032

2034

2036

2038

2040

2042

2044

2000

2010

−y

−x ← → +x

+y

# FIG. 21

2112 2114 2116 2118 2120

2122 (0,0)

2124

2126

2128

2130

2132

2134

2136

2100

2110

-y

-x ← → +x

+y

# FIG. 22

| 2212 | 2214 | 2216 | 2218 | 2220 | 2222 | 2224 | 2226 | 2228 | | | |

| 2230 | (0,0) | | | | | | | |
|------|-------|---|---|---|---|---|---|---|
| 2232 | | | | | | | | |
| 2234 | | | | | | | | |
| 2236 | | | | | | | | |

2200

2210

−y

−x ⟷ +x

+y

# FIG. 23

# FIG. 24

(-1,-1) (2412)　　　　　　(2414)　　　　　　(2416)

(2422)　(0,0)　　　　　　　　　　　(M-1,0) (M,0)

2410

(2424)

(2426) (0,N-1)

(0,N)　　　　　　2400

2420

-y

-x　　+x

+y

# FIG. 25

# FIG. 26

(-1, 1)  2612 ···· 2614 ··· 2616 ··· 2618 ··· 2620 ··· 2622 ··· 2624 ··· 2626 ··· 2628 ··· ○

(0,0)                                  (M−1,0)  (M,0)

2610

(0,N−1)

(0,N)          2600

2620

−y

−x          +x

+y

# FIG. 27

(-1,-1)  (2712)  (2714)  (2716)  (2718)

(0,0)  (M-1,0) (M,0)

2710

2700

(0,N-1)

(0,N)

2720

-y

-x  +x

+y

# FIG. 28

EP 3 902 251 A1

FIG. 29

60

# FIG. 30

# FIG. 31

3100

START

DETERMINE INTRA PREDICTION MODE OF CURRENT
CHROMA BLOCK FROM CHROMA INTRA PREDICTION
INFORMATION OBTAINED FROM BITSTREAM — 3102

WHEN INTRA PREDICTION MODE OF CURRENT CHROMA
BLOCK ACCORDING TO CHROMA INTRA PREDICTION
INFORMATION IS CCLM MODE, OBTAIN REFERENCE
CHROMA SAMPLES ADJACENT TO CURRENT CHROMA
BLOCK, AND REFERENCE LUMA SAMPLES
CORRESPONDING TO REFERENCE CHROMA SAMPLES — 3104

PREDICT CURRENT CHROMA BLOCK, BASED ON
CORRELATION BETWEEN REFERENCE CHROMA SAMPLES
AND REFERENCE LUMA SAMPLES AND REFERENCE LUMA
BLOCK CORRESPONDING TO CURRENT CHROMA BLOCK — 3106

END

# FIG. 32

<u>3200</u>

```
( START )
```

OBTAIN REFERENCE CHROMA SAMPLES ADJACENT TO
CURRENT CHROMA BLOCK, AND REFERENCE LUMA
SAMPLES CORRESPONDING TO REFERENCE CHROMA
SAMPLES, AND PREDICT CURRENT CHROMA BLOCK,
BASED ON CORRELATION BETWEEN REFERENCE CHROMA
SAMPLES AND REFERENCE LUMA SAMPLES, AND REFERENCE
LUMA BLOCK CORRESPONDING TO CURRENT CHROMA BLOCK      — 3202

ACCORDING TO RESULT OF PREDICTION WITH RESPECT TO
CURRENT CHROMA BLOCK, DETERMINE WHETHER CCLM
MODE IS TO BE APPLIED TO CURRENT CHROMA BLOCK      — 3204

GENERATE BITSTREAM INCLUDING CHROMA INTRA
PREDICTION INFORMATION INDICATING WHETHER CCLM
MODE IS TO BE APPLIED TO CURRENT CHROMA BLOCK      — 3206

( END )
```

## INTERNATIONAL SEARCH REPORT

| | |
|---|---|
| International application No. |
| **PCT/KR2019/018295** |

**A.    CLASSIFICATION OF SUBJECT MATTER**

*H04N 19/11(2014.01)i, H04N 19/593(2014.01)i, H04N 19/105(2014.01)i, H04N 19/186(2014.01)i, H04N 19/132(2014.01)i*

According to International Patent Classification (IPC) or to both national classification and IPC

**B.    FIELDS SEARCHED**

Minimum documentation searched (classification system followed by classification symbols)
H04N 19/11; H04N 19/105; H04N 19/117; H04N 19/159; H04N 19/59; H04N 19/593; H04N 19/186; H04N 19/132

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: intra, prediction, chroma, luma, reference, sample

**C.    DOCUMENTS CONSIDERED TO BE RELEVANT**

| Category* | Citation of document, with indication, where appropriate, of the relevant passages | Relevant to claim No. |
|---|---|---|
| Y | WO 2018-062921 A1 (LG ELECTRONICS INC.) 05 April 2018<br>See paragraphs [0094]-[0095]; and claims 1, 5-7. | 1-17 |
| Y | KR 10-2016-0051343 A (INDUSTRY ACADEMY COOPERATION FOUNDATION OF<br>SEJONG UNIVERSITY) 11 May 2016<br>See claim 6. | 1-17 |
| A | WO 2018-118940 A1 (QUALCOMM INCORPORATED) 28 June 2018<br>See paragraph [0074]; and figure 18. | 1-17 |
| A | WO 2018-140587 A1 (QUALCOMM INCORPORATED) 02 August 2018<br>See claim 7; and figure 10. | 1-17 |
| A | CHEN, Jianle et al. Algorithm Description of Joint Exploration Test Model 4.<br>JVET-D1001_v3. Joint Video Exploration Team (JVET) of ITU-T SG 16 WP 3 and<br>ISO/IEC JTC 1/SC 29/WG 11 4th Meeting: Chengdu, CN. 19 November 2016<br>See page 9. | 1-17 |

☐  Further documents are listed in the continuation of Box C.          ☒  See patent family annex.

| | |
|---|---|
| *        Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 01 APRIL 2020 (01.04.2020) | **07 APRIL 2020 (07.04.2020)** |

| Name and mailing address of the ISA/KR | Authorized officer |
|---|---|
| Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/018295**

| Patent document cited in search report | Publication date | Patent family member | Publication date |
|---|---|---|---|
| WO 2018-062921 A1 | 05/04/2018 | CN 109804628 A<br>EP 3509298 A1<br>JP 2019-530366 A<br>KR 10-2019-0042090 A<br>US 2020-0036985 A1 | 24/05/2019<br>10/07/2019<br>17/10/2019<br>23/04/2019<br>30/01/2020 |
| KR 10-2016-0051343 A | 11/05/2016 | None | |
| WO 2018-118940 A1 | 28/06/2018 | BR 112019011883 A2<br>CN 110024406 A<br>EP 3556099 A1<br>JP 2020-502925 A<br>KR 10-2019-0097036 A<br>TW 201830963 A<br>US 10477240 B2<br>US 2018-0176594 A1 | 22/10/2019<br>16/07/2019<br>23/10/2019<br>23/01/2020<br>20/08/2019<br>16/08/2018<br>12/11/2019<br>21/06/2018 |
| WO 2018-140587 A1 | 02/08/2018 | AU 2018-212665 A1<br>CN 110169064 A<br>EP 3574650 A1<br>KR 10-2019-0110548 A<br>SG 11201905243 A<br>TW 201832562 A<br>US 2018-0220130 A1 | 04/07/2019<br>23/08/2019<br>04/12/2019<br>30/09/2019<br>27/08/2019<br>01/09/2018<br>02/08/2018 |

Form PCT/ISA/210 (patent family annex) (January 2015)